# EUROPEAN PATENT APPLICATION

(11) **EP 4 815 553 A1**
(43) Date of publication of application: **30.09.2026**
(21) Application number: 24905921.3
(22) Date of filing: 11.11.2024
(51) Int. Cl.: H04W 28/08

(54) **COMMUNICATION METHOD AND RELATED DEVICE**

(30) Priority: 21.12.2023 CN 202311776066
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN)
(74) Representative: Pfenning, Meinig & Partner mbB
(86) International application number: PCT/CN2024/131182
(87) International publication number: WO 2025/130434

(57) **Abstract**

A communication method and a related device are provided. In the method, after a first communication apparatus sends first information to request a service, the first communication apparatus may receive data of the service from N functional entities, where the first information is used to determine the N functional entities that provide the service. In other words, the service requested by the first communication apparatus may be provided by the N functional entities. The N functional entities may be deployed on (and/or connected to) one or more communication apparatuses, that is, the data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

## Description

This application claims priority to Chinese Patent Application No. 202311776066.5, filed with the China National Intellectual Property Administration on December 21, 2023 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Conventional communication networks aim to provide connection channels required for data communication between terminals, as well as between terminals and application servers, and to provide corresponding life cycle management mechanisms and communication quality of service (Quality of Service, QoS) guarantees.

Currently, for a communication apparatus in a communication network, in addition to signal transmission and reception capabilities, the communication apparatus may also have the data processing capability. Usually, the data processing capability may provide computing power support for the foregoing data communication process. For example, the data processing capability may provide computing power support for the signal transmission and reception capability of the node, to determine time-frequency domain resources or the like for signal transmission and reception, and implement communication between the communication apparatus and other communication apparatuses through the transmission and reception process.

However, in addition to processing signals received and sent in the communication network, the communication apparatus may also handle other processing. Therefore, how to improve utilization of the data processing capability of the communication apparatus is an urgent technical problem to be resolved.

### SUMMARY

This application provides a communication method and a related device, enabling a communication apparatus to provide services based on requests from other communication apparatuses. By enabling cooperation among different communication apparatuses, utilization of the data processing capability of a communication apparatus can be improved.

A first aspect of this application provides a communication method. The method is performed by a first communication apparatus. The first communication apparatus may be a communication device (for example, a network device or a terminal device), or the first communication apparatus may be some components (for example, a processor, a chip, or a chip system) in a communication device, or the first communication apparatus may be a logic module or software that can implement all or some functions of a communication device. In the method, the first communication apparatus sends first information to a second communication apparatus, where the first information is used to request a service, the first information is used to determine N functional entities that provide the service, and N is a positive integer; and the first communication apparatus receives data of the service from the N functional entities.

Based on the foregoing technical solution, after the first communication apparatus sends the first information used to request the service, the first communication apparatus may receive the data of the service from the N functional entities, and the first information is used to determine the N functional entities that provide the service. In other words, the service requested by the first communication apparatus may be provided by the N functional entities. Some or all functional entities in the N functional entities may be deployed on (and/or connected to) one or more communication apparatuses, that is, the data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

In this application, terms such as a functional entity, an entity, a logic entity, and a physical entity may be replaced with each other.

It should be noted that there may be one or more communication apparatuses deployed on (and/or connected to) the N functional entities, and there may be a plurality of relationships between a quantity of the communication apparatuses and a value of N. The communication apparatus connected to the N functional entities is used as an example. For example, when different functional entities are connected to different communication apparatuses, the quantity of the communication apparatuses may be equal to the value of N. For another example, when at least two different functional entities are connected to a same communication apparatus, the quantity of the communication apparatuses may be less than the value of N. For another example, when at least one different functional entity is connected to two or more communication apparatuses, the quantity of the communication apparatuses may be greater than the value of N.

Optionally, in a process in which the first communication apparatus receives the data of the service from the N functional entities, the first communication apparatus may perform communication through a direct link. For example, the first communication apparatus separately communicates with the N functional entities through the direct link, to receive the data of the service. Alternatively, the first communication apparatus may perform communication in another manner. For example, the first communication apparatus communicates with the N functional entities through one or more relay nodes (or forwarding nodes), to receive the data of the service. For another example, the first communication apparatus may communicate with a part of the N functional entities through one or more relay nodes (or forwarding nodes), and communicate with the other part of the N functional entities through a direct link, to receive the data of the service. For another example, the first communication apparatus communicates with the N functional entities through a wireless link and/or a wired link, to receive the data of the service.

In a possible implementation of the first aspect, that the first communication apparatus sends the first information to the second communication apparatus includes: The first communication apparatus sends the first information to the second communication apparatus through a network exposure function (network exposure function, NEF).

Based on the foregoing technical solution, when the first communication apparatus is an application (where for example, the application is a client application (Client APP) deployed on a terminal device or a server application (Server APP) deployed on an application server), a communication process between the first communication apparatus and the second communication apparatus may be forwarded through the NEF. That is, the first communication apparatus may send, to the second communication apparatus through the NEF, the first information used to request the service.

In a possible implementation of the first aspect, the first information includes at least one of the following:
type information of the service, indicating a type of the service, where the type includes at least one of network as a service (network as a service, NaaS), computing as a service (computing as a service, CaaS), AI as a service (AI as a service, AIaaS), and data as a service (data as a service, DaaS);
content information of the service, indicating at least one of a requirement for a network resource and a QoS requirement for the service; and
feedback trigger condition information of the service, indicating a feedback trigger condition for QoS fulfillment status.

Based on the foregoing technical solution, the first information used to request the service may include at least one of the foregoing items, to improve flexibility of implementing the solution. In addition, at least one of foregoing content may also represent requested service-related information, so that the first communication apparatus obtains the corresponding service.

In a possible implementation of the first aspect, the feedback trigger condition for QoS fulfillment status includes a QoS deviation degree and/or a threshold of a QoS deviation value.

Based on the foregoing technical solution, the feedback trigger condition information, of the service, included in the first information may indicate the QoS deviation degree and/or the threshold of the QoS deviation value. In this manner, the second communication apparatus can subsequently feed back a QoS status of the service to the first communication apparatus based on QoS status information of the service provided for the first communication apparatus, and the QoS deviation degree and/or the threshold of the QoS deviation value.

In a possible implementation of the first aspect, the method further includes: The first communication apparatus receives indication information indicating the QoS status information of the service.

Based on the foregoing technical solution, the first communication apparatus may further receive the indication information, so that the first communication apparatus can determine the QoS status of the service.

Optionally, the indication information indicating the QoS status information of the service may be from the second communication apparatus, the N functional entities, or another communication apparatus (for example, a third communication apparatus, a fourth communication apparatus, or a fifth communication apparatus) mentioned below.

Optionally, the indication information indicating the QoS status information of the service may be information sent periodically, may be condition-triggered information (where for example, QoS is lower than a threshold), or the like.

A second aspect of this application provides a communication method. The method is performed by a second communication apparatus. The second communication apparatus may be a communication device (for example, a network device), or the second communication apparatus may be some components (for example, a processor, a chip, or a chip system) in a communication device, or the second communication apparatus may be a logic module or software that can implement all or some functions of a communication device. In the method, the second communication apparatus receives first information from a first communication apparatus, where the first information is used to request a service, the first information is used to determine N functional entities that provide the service, and N is a positive integer. The second communication apparatus sends second information to the N functional entities, where the second information indicates to provide the service for the first communication apparatus.

Based on the foregoing technical solution, after the second communication apparatus receives the first information used to request the service, the second communication apparatus may determine, based on the first information, the N functional entities that provide the service. In addition, the second communication apparatus may send, to the N functional entities, second information indicating to provide the service for the first communication apparatus, and subsequently the first communication apparatus may receive data of the service from the N functional entities. In other words, the service requested by the first communication apparatus may be provided by the N functional entities. The N functional entities may be deployed on (and/or connected to) one or more communication apparatuses, that is, the data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, the second communication apparatus may send the second information to the N functional entities in a plurality of manners. For example, the second communication apparatus may separately send the second information to the N functional entities, that is, each functional entity obtains the second information; or the second information may include N pieces of same or different information, and the second communication apparatus separately sends the N pieces of same or different information to the N functional entities, that is, each functional entity obtains one of the N pieces of information.

Optionally, in a process in which the second communication apparatus sends the second information to the N functional entities, the second communication apparatus may perform communication through a direct link. For example, the second communication apparatus separately communicates with the N functional entities through the direct link, to send the second information. Alternatively, the second communication apparatus may perform communication in another manner. For example, the second communication apparatus communicates with the N functional entities through one or more relay nodes (or forwarding nodes), to send the second information. For another example, the second communication apparatus may communicate with a part of the N functional entities through one or more relay nodes (or forwarding nodes), and communicate with the other part of the N functional entities through a direct link, to send the second information.

In a possible implementation of the second aspect, that the second communication apparatus receives the first information from the first communication apparatus includes: The second communication apparatus receives the first information from the first communication apparatus through an NEF.

Based on the foregoing technical solution, when the first communication apparatus is an application (where for example, the application is a Client APP deployed on a terminal device or a Server APP deployed on an application server), a communication process between the first communication apparatus and the second communication apparatus may be forwarded through the NEF. That is, the second communication apparatus may receive the first information from the second communication apparatus through the NEF.

In a possible implementation of the second aspect, the method further includes: The second communication apparatus obtains third information, where the third information indicates resource status information of M functional entities, the M functional entities include the N functional entities, and M is greater than or equal to N.

Optionally, the third information may be used to determine the N functional entities. In other words, that the first information is used to determine the N functional entities that provide the service includes: the first information and the third information are used to determine the N functional entities in the M functional entities.

Based on the foregoing technical solution, the second communication apparatus may further obtain the third information indicating the resource status information of the M functional entities, and determine, based on the first information and the third information, the N functional entities that provide the service for the first communication apparatus in the M functional entities, so that the second communication apparatus can determine, in the M functional entities, the N functional entities that meet a requirement for the service.

Optionally, the second communication apparatus may obtain the third information in a plurality of manners. For example, the second communication apparatus may obtain the third information based on the resource status information of the M functional entities after separately receiving the resource status information from the M functional entities; or the second communication apparatus may receive information from one or more management devices, and obtain the third information based on the received information, where the one or more management devices are configured to manage/control/obtain the resource status information of the M functional entities.

Optionally, the third information may be information periodically obtained by the second communication apparatus, or may be condition-triggered information obtained by the second communication apparatus (for example, a condition in which a resource status of one or more functional entities changes or a change value exceeds a threshold), or may be implemented in another manner. This is not limited herein.

In a possible implementation of the second aspect, the second information includes at least one of the following: an identifier of a task, a type of the task, a QoS requirement of the task, and a feedback trigger condition for QoS fulfillment status of the task, where the task is used to provide the service.

Based on the foregoing technical solution, the second information sent by the second communication apparatus may include at least one of the foregoing task-related information, and the task is used to provide the service. In other words, after the second communication apparatus obtains the first information for requesting the service, the second communication apparatus may send, to the N functional entities by using the second information, the task indicating to provide the service. In this manner, the service requested by the first communication apparatus can be released in a form of a task, to adapt to a "task-centric" network.

Optionally, the second information indicates to provide the service for the first communication apparatus. When the second information includes at least one of the foregoing task-related information, the second communication apparatus may provide the service in a form of a task. Correspondingly, in the second aspect and a related implementation process, the second communication apparatus may be understood as a task management function (task management function, TMF), a TMF node/module/network element, or the like.

In a possible implementation of the second aspect, the QoS requirement of the task includes one or more QoS requirements of the N functional entities.

Based on the foregoing technical solution, the QoS requirement of the task may include the QoS requirement for the service provided by the N functional entities. In this manner, when the service provided by the N functional entities meets the QoS requirement for providing the service, the QoS requirement of the task can be guaranteed.

Optionally, in the one or more QoS requirements of the N functional entities included in the QoS requirement of the task, there may be a plurality of implementations of a quantity of the one or more QoS requirements and a value of N. For example, when different functional entities have different QoS requirements, a quantity of the QoS requirements may be equal to the value of N. For another example, when QoS requirements of at least two different functional entities are the same, a quantity of the QoS requirements may be less than the value of N.

Optionally, the feedback trigger condition for QoS fulfillment status of the task may include a feedback trigger condition for the fulfillment status of the one or more QoS requirements of the N functional entities.

In a possible implementation of the second aspect, the task meets at least one of the following:
the first information is used to determine the identifier of the task;
the first information includes type information of the service and/or content information of the service, and the type information of the service and/or the content information of the service are/is used to determine the type of the task;
the first information includes content information of the service, and the content information of the service is used to determine the QoS requirement of the task; and
the first information includes feedback trigger condition information of the service, and the feedback trigger condition information of the service is used to determine the feedback trigger condition for QoS fulfillment status of the task.

Optionally, the type of the task includes at least one of a computing offloading task, an AI task, and a data collection task.

Based on the foregoing technical solution, the task-related information indicated by the second information may be determined by using the first information for requesting the service, so that the task indicated by the second information can provide the data required by the service.

In a possible implementation of the second aspect, the method further includes: The second communication apparatus receives fourth information from the N functional entities, where the fourth information indicates a QoS fulfillment status of the service. The second communication apparatus sends fifth information to the N functional entities and/or the first communication apparatus based on the fourth information, where the fifth information is used to update the QoS requirement of the task.

Based on the foregoing technical solution, the second communication apparatus may further receive the fourth information, from the N functional entities, indicating the QoS fulfillment status of the service, and the second communication apparatus may further send, based on the fourth information, the fifth information used to update the QoS requirement of the task, to implement policy optimization of the QoS requirement of the task.

In a possible implementation of the second aspect, the first information includes at least one of the following:
the type information of the service, indicating a type of the service, where the type includes at least one of network as a service, computing as a service, AI as a service, and data as a service;
content information of the service, indicating at least one of a requirement for a network resource and a QoS requirement for the service; and
feedback trigger condition information of the service, indicating a feedback trigger condition for QoS fulfillment status.

Based on the foregoing technical solution, the first information used to request the service may include at least one of the foregoing items, to improve flexibility of implementing the solution. In addition, at least one of foregoing content may also represent requested service-related information, so that the first communication apparatus obtains the corresponding service.

In a possible implementation of the second aspect, the feedback trigger condition for QoS fulfillment status includes a QoS deviation degree and/or a threshold of a QoS deviation value.

Based on the foregoing technical solution, the feedback trigger condition information, of the service, included in the first information may indicate the QoS deviation degree and/or the threshold of the QoS deviation value. In this manner, the second communication apparatus can subsequently feed back a QoS status of the service to the first communication apparatus based on QoS status information of the service provided for the first communication apparatus, and the QoS deviation degree and/or the threshold of the QoS deviation value.

A third aspect of this application provides a communication method. The method is performed by a second communication apparatus. The second communication apparatus may be a communication device (for example, a network device), or the second communication apparatus may be some components (for example, a processor, a chip, or a chip system) in a communication device, or the second communication apparatus may be a logic module or software that can implement all or some functions of a communication device. In the method, the second communication apparatus receives first information from a first communication apparatus, where the first information is used to request a service, the first information includes type information of the service, and the type information of the service indicates that a type of the service is computing as a service. The second communication apparatus sends sixth information to a third communication apparatus based on the first information, where the sixth information is used to request resource status information of one or more functional entities. The second communication apparatus receives seventh information from the third communication apparatus, where the seventh information indicates resource status information of the one or more functional entities, and the first information and the seventh information are used to determine N functional entities among the one or more functional entities. The second communication apparatus sends second information to the N functional entities, where the second information indicates to provide the service for the first communication apparatus.

Based on the foregoing technical solution, after the second communication apparatus receives the first information used to request the service, the second communication apparatus may determine, by using the seventh information exchanged with the third communication apparatus, the N functional entities that provide the service. In addition, the second communication apparatus may send, to the N functional entities, second information indicating to provide the service for the first communication apparatus, and subsequently the first communication apparatus may receive data of the service from the N functional entities. In other words, the service requested by the first communication apparatus may be provided by the N functional entities. The N functional entities may be connected to one or more communication apparatuses, that is, the one or more communication apparatuses connected to the N functional entities can provide the data for the service requested by the first communication apparatus. Therefore, in a communication system, the one or more communication apparatuses can provide services based on requests of other communication apparatuses. By enabling cooperation among different communication apparatuses, utilization of the data processing capability of the communication apparatus can be improved.

Optionally, the first information may further include one or more of a requirement for a computing resource and/or a transmission resource, a QoS requirement, and a feedback trigger condition for QoS fulfillment status. In this manner, the service indicated by the second information by the second communication apparatus based on the first information can meet the one or more items. For example, the service indicated by the second information may meet the requirement for the computing resource and/or the transmission resource, and/or the QoS requirement. For another example, when the feedback trigger condition is triggered, the service indicated by the second information may be used to feed back the QoS fulfillment status.

Optionally, the second information may further indicate a computing task allocation policy on the N functional entities.

Optionally, the first information received by the second communication apparatus includes type information indicating that the type of the service is CaaS, and the second communication apparatus can indicate, by using the second information, the N functional entities to provide a service of the CaaS type for the first communication apparatus. Correspondingly, in the third aspect and a related implementation process, the second communication apparatus may be understood as a computing management function (computing management function, CMF), a CMF node/module/network element, or the like.

A fourth aspect of this application provides a communication method. The method is performed by a third communication apparatus. The third communication apparatus may be a communication device (for example, a network device), or the third communication apparatus may be some components (for example, a processor, a chip, or a chip system) in a communication device, or the third communication apparatus may be a logic module or software that can implement all or some functions of a communication device. In the method, the third communication apparatus receives sixth information from a second communication apparatus, where the sixth information is used to request resource status information of one or more functional entities. The third communication apparatus sends seventh information to the second communication apparatus, where the seventh information indicates resource status information of the one or more functional entities, and the seventh information is used to determine N functional entities among the one or more functional entities.

Based on the foregoing technical solution, after the third communication apparatus receives the resource status information of the one or more functional entities, the third communication apparatus can send the seventh information indicating the resource status information of the one or more functional entities. Subsequently, the second communication apparatus can determine the N functional entities among the one or more functional entities by using the seventh information, and provide a service for a first communication apparatus through the N functional entities. In other words, the service requested by the first communication apparatus may be provided by the N functional entities. The N functional entities may be deployed on (and/or connected to) one or more communication apparatuses, that is, data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, after the third communication apparatus receives the resource status information of the one or more functional entities, the third communication apparatus first obtains the resource status information of the one or more functional entities, and then sends the seventh information indicating the resource status information of the one or more functional entities.

Optionally, that the third communication apparatus obtains the resource status information of the one or more functional entities includes: The third communication apparatus generates a resource status collection task, and sends the task to the one or more functional entities, so that the one or more functional entities report their own resource status information.

Optionally, the sixth information received by the third communication apparatus is used to request the resource status information of the one or more functional entities, and the third communication apparatus can indicate the resource status information of the one or more functional entities by using the seventh information, that is, the third communication apparatus can provide a service of a DaaS type. Correspondingly, in the fourth aspect and a related implementation process, the third communication apparatus may be understood as a data management function (data management function, DMF), a DMF node/module/network element, or the like.

In a possible implementation of the third aspect or the fourth aspect, the seventh information includes at least one of the following: computing resource status information of the one or more functional entities and transmission status information of a network in which the one or more functional entities are located.

Based on the foregoing technical solution, the seventh information may include at least one of the foregoing items, so that the second communication apparatus can obtain a computing resource status of each functional entity and a network transmission status based on the seventh information, and the second communication apparatus determines the N functional entities among the one or more functional entities based on the information.

A fifth aspect of this application provides a communication method. The method is performed by a second communication apparatus. The second communication apparatus may be a communication device (for example, a network device), or the second communication apparatus may be some components (for example, a processor, a chip, or a chip system) in a communication device, or the second communication apparatus may be a logic module or software that can implement all or some functions of a communication device. In the method, the second communication apparatus receives first information from a first communication apparatus, where the first information is used to request a service, the first information includes type information of the service, and the type information of the service indicates that a type of the service is AI as a service. The second communication apparatus sends eighth information to a third communication apparatus based on the first information, where the eighth information may be used to request AI data of the service; and/or the eighth information may be used to determine N functional entities that provide the AI data, and N is a positive integer.

Based on the foregoing technical solution, after the second communication apparatus receives the first information used to request the service, the second communication apparatus may send, to the third communication apparatus, the eighth information used to request the AI data of the service. In addition, the third communication apparatus may determine, based on the eighth information, the N functional entities that provide the AI data, and subsequently the first communication apparatus may receive data of the service from the N functional entities. In other words, the service requested by the first communication apparatus may be provided by the N functional entities. The N functional entities may be deployed on (and/or connected to) one or more communication apparatuses, that is, data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, the first information may further include an AI service type, a requirement for a resource (including at least one of a computing resource, a transmission resource, and a model resource), a QoS requirement, a feedback trigger condition for QoS fulfillment status, and the like. Correspondingly, it is subsequently indicated to the N functional entities that the provided service can meet the one or more items.

Optionally, the first information received by the second communication apparatus includes type information indicating that the type of the service is AIaaS, and the second communication apparatus can indicate, by using the eighth information, to provide a service of the AIaaS type for the first communication apparatus. Correspondingly, in the fifth aspect and a related implementation process, the second communication apparatus may be understood as an artificial intelligence management function (AI management function, AIMF), an AIMF node/module/network element, or the like.

In a possible implementation of the fifth aspect, the method further includes:
The second communication apparatus receives the AI data from the third communication apparatus, and sends the AI data to the first communication apparatus.

Alternatively, the second communication apparatus receives pipeline orchestration information from the third communication apparatus, and sends the pipeline orchestration information to the first communication apparatus, where the pipeline orchestration information includes a forwarding path of the AI data in the N functional entities and/or identifiers of the N functional entities.

Based on the foregoing technical solution, the second communication apparatus may further receive the AI data from the third communication apparatus, and the second communication apparatus may further send the AI data to the first communication apparatus. In this manner, the first communication apparatus can obtain the AI data, to provide AIaaS for the first communication apparatus.

Alternatively, the second communication apparatus receives the pipeline orchestration information from the third communication apparatus, and the second communication apparatus may further send the pipeline orchestration information to the first communication apparatus, so that the first communication apparatus can subsequently obtain the AI data by using the pipeline orchestration information. In this manner, the first communication apparatus can obtain the AI data, to provide AIaaS for the first communication apparatus.

A sixth aspect of this application provides a communication method. The method is performed by a third communication apparatus. The third communication apparatus may be a communication device (for example, a network device), or the third communication apparatus may be some components (for example, a processor, a chip, or a chip system) in a communication device, or the third communication apparatus may be a logic module or software that can implement all or some functions of a communication device. In the method, the third communication apparatus receives eighth information from a second communication apparatus, where the eighth information may be used to request AI data of a service; and/or the eighth information may be used to request to determine N functional entities that provide the AI data, and N is a positive integer. The third communication apparatus receives the AI data from the N functional entities, and sends the AI data to the second communication apparatus; or the third communication apparatus sends pipeline orchestration information to the second communication apparatus, where the pipeline orchestration information includes a forwarding path of the AI data in the N functional entities and/or identifiers of the N functional entities; or the third communication apparatus sends the pipeline orchestration information to the N functional entities.

Based on the foregoing technical solution, after the third communication apparatus receives the eighth information of the AI data used to request the service, the third communication apparatus may determine, based on the eighth information, the N functional entities that provide the AI data, and subsequently the first communication apparatus may obtain the AI data from the N functional entities in a plurality of manners. In other words, the service requested by the first communication apparatus may be provided by the N functional entities. The N functional entities may be deployed on (and/or connected to) one or more communication apparatuses, that is, data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, after receiving the eighth information of the AI data used to request the service, the third communication apparatus first obtains AI data information; the third communication apparatus generates an AI data collection task, and sends the AI data collection task to the one or more communication apparatuses, so that the one or more communication apparatuses provide the AI data for the third communication apparatus based on pipeline orchestration information included in the AI data collection task; and the third communication apparatus receives the AI data from the N functional entities, and sends the AI data to the second communication apparatus.

Optionally, after receiving the eighth information of the AI data used to request the service, the third communication apparatus first determines the pipeline orchestration information; the third communication apparatus generates the AI data collection task, and sends the AI data collection task to the one or more communication apparatuses, so that the one or more communication apparatuses provide the AI data for the first communication apparatus based on the pipeline orchestration information included in the AI data collection task; and the third communication apparatus sends the pipeline orchestration information to the second communication apparatus.

Optionally, the eighth information received by the third communication apparatus is used to request the AI data of the service, and the third communication apparatus can provide the AI data in a plurality of manners, that is, the third communication apparatus may provide a service of a DaaS type. Correspondingly, in the sixth aspect and a related implementation process, the third communication apparatus may be understood as a DMF, a DMF node/module/network element, or the like.

Optionally, the AI data may include one or more of an AI model parameter, a dataset required for AI training, and a dataset required for AI inference.

A seventh aspect of this application provides a communication method. The method is performed by a second communication apparatus. The second communication apparatus may be a communication device (for example, a network device), or the second communication apparatus may be some components (for example, a processor, a chip, or a chip system) in a communication device, or the second communication apparatus may be a logic module or software that can implement all or some functions of a communication device. In the method, the second communication apparatus receives first information from a first communication apparatus, where the first information is used to request a service, the first information includes type information of the service, and the type information of the service indicates that a type of the service is AI as a service. The second communication apparatus sends ninth information to a fourth communication apparatus based on the first information, where the ninth information is used to request an AI computing result of the service; and/or the ninth information is used to determine N functional entities that provide the AI computing result, and N is a positive integer.

Based on the foregoing technical solution, after the second communication apparatus receives the first information used to request the service, the second communication apparatus may send, to the fourth communication apparatus, the ninth information used to request the AI computing result of the service. In addition, the fourth communication apparatus may determine, based on the ninth information, the N functional entities that provide the AI computing result, and subsequently the first communication apparatus may receive data of the service from the N functional entities. In other words, the service requested by the first communication apparatus may be provided by the N functional entities. The N functional entities may be deployed on (and/or connected to) one or more communication apparatuses, that is, data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, the first information received by the second communication apparatus includes type information used to indicate that a type of the service is AIaaS, and the ninth information sent by the second communication apparatus may be used to determine the N functional entities that provide the AI computing result of the service, that is, the second communication apparatus may provide a service of the AIaaS type. Correspondingly, in the seventh aspect and a related implementation process, the second communication apparatus may be understood as an AIMF, an AIMF node/module/network element, or the like.

In a possible implementation of the seventh aspect, the method further includes:
The second communication apparatus receives AI computing task information from the fourth communication apparatus, where the AI computing task information indicates task information for providing the AI computing result.

Alternatively, the second communication apparatus receives, from the fourth communication apparatus, indication information indicating a processing result of the service.

Alternatively, the second communication apparatus receives the AI computing result from the fourth communication apparatus, and sends the AI computing result to the first communication apparatus.

Based on the foregoing technical solution, the second communication apparatus may enable, in the foregoing plurality of manners, the first communication apparatus to obtain the AI computing result provided by the N functional entities, to improve flexibility of implementing the solution.

An eighth aspect of this application provides a communication method. The method is performed by a fourth communication apparatus. The fourth communication apparatus may be a communication device (for example, a network device), or the fourth communication apparatus may be some components (for example, a processor, a chip, or a chip system) in a communication device, or the fourth communication apparatus may be a logic module or software that can implement all or some functions of a communication device. In the method, the fourth communication apparatus receives ninth information from a second communication apparatus, where the ninth information is used to request an AI computing result of the service; and/or the ninth information is used to determine N functional entities that provide the AI computing result, and N is a positive integer. The fourth communication apparatus sends AI computing task information to the N functional entities, where the AI computing task information indicates task information for providing the AI computing result.

Based on the foregoing technical solution, after the fourth communication apparatus receives the ninth information used to request the AI computing result of the service, the fourth communication apparatus may determine, based on the ninth information, the N functional entities that provide the AI computing result, and subsequently the fourth communication apparatus may send the AI computing task information to the N functional entities, so that the N functional entities send the AI computing result to a first communication apparatus based on the AI computing task information. In other words, the service requested by the first communication apparatus may be provided by the N functional entities. The N functional entities may be deployed on (and/or connected to) one or more communication apparatuses, that is, data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, after receiving the ninth information used to request the AI computing result of the service, the fourth communication apparatus generates an AI computing offloading task; and the fourth communication apparatus may send the AI computing offloading task to the N functional entities, where the AI computing offloading task includes the N functional entities and AI computing task allocation policies on the N functional entities.

Optionally, the ninth information received by the fourth communication apparatus is used to request the AI computing result of the service, and the fourth communication apparatus can provide the AI computing result in a plurality of manners, that is, the fourth communication apparatus may provide a service of a CaaS type. Correspondingly, in the eighth aspect and a related implementation process, the fourth communication apparatus may be understood as a CMF, a CMF node/module/network element, or the like.

In a possible implementation of the eighth aspect, the method further includes:
The fourth communication apparatus sends the AI computing task information to the second communication apparatus, where the AI computing task information indicates the task information for providing the AI computing result.

Alternatively, the fourth communication apparatus sends, to the second communication apparatus, indication information indicating a processing result of the service.

Alternatively, the fourth communication apparatus receives the AI computing result from the N functional entities, and sends the AI computing result to the second communication apparatus or the first communication apparatus, where the ninth information is determined based on a request of the first communication apparatus.

Based on the foregoing technical solution, the fourth communication apparatus may further enable, in the foregoing plurality of manners, the first communication apparatus to obtain the AI computing result from the N functional entities, or the second communication apparatus to learn of an execution result of an AI computing task.

A ninth aspect of this application provides a communication method. The method is performed by a second communication apparatus. The second communication apparatus may be a communication device (for example, a network device), or the second communication apparatus may be some components (for example, a processor, a chip, or a chip system) in a communication device, or the second communication apparatus may be a logic module or software that can implement all or some functions of a communication device. In the method, the second communication apparatus receives first information from a first communication apparatus, where the first information is used to request a service, the first information includes type information of the service, and the type information of the service indicates that a type of the service is computing as a service. The second communication apparatus sends tenth information to a fifth communication apparatus based on the first information, where the tenth information is used to request an AI computing result of the service; and/or the tenth information is used to determine N functional entities that provide the AI computing result, and N is a positive integer.

Based on the foregoing technical solution, after the second communication apparatus receives the first information used to request the service, the second communication apparatus may send, to the fifth communication apparatus, the tenth information used to request the AI computing result of the service. In addition, the fifth communication apparatus may determine, based on the tenth information, the N functional entities that provide the AI computing result, and subsequently the first communication apparatus may receive data of the service from the N functional entities. In other words, the service requested by the first communication apparatus may be provided by the N functional entities. The N functional entities may be deployed on (and/or connected to) one or more communication apparatuses, that is, data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, the first information received by the second communication apparatus includes type information indicating that the type of the service is CaaS, and the tenth information sent by the second communication apparatus may be used to determine the N functional entities that provide the AI computing result. Correspondingly, in the ninth aspect and a related implementation process, the second communication apparatus may be understood as a CMF, a CMF node/module/network element, or the like.

In a possible implementation of the ninth aspect, the method further includes:
The second communication apparatus receives AI computing task information from the fifth communication apparatus, where the AI computing task information indicates task information for providing the AI computing result.

Alternatively, the second communication apparatus receives the AI computing result from the fifth communication apparatus, and sends the AI computing result to the first communication apparatus.

Based on the foregoing technical solution, the second communication apparatus may enable, in the foregoing plurality of manners, the first communication apparatus to obtain the AI computing result provided by the N functional entities, to improve flexibility of implementing the solution.

A tenth aspect of this application provides a communication method. The method is performed by a fifth communication apparatus. The fifth communication apparatus may be a communication device (for example, a network device), or the fifth communication apparatus may be some components (for example, a processor, a chip, or a chip system) in a communication device, or the fifth communication apparatus may be a logic module or software that can implement all or some functions of a communication device. In the method, the fifth communication apparatus receives tenth information from a second communication apparatus, where the tenth information is used to request an AI computing result of a service; and/or the tenth information is used to determine N functional entities that provide the AI computing result, and N is a positive integer. The fifth communication apparatus sends AI computing task information to the N functional entities, where the AI computing task information indicates task information for providing the AI computing result.

Based on the foregoing technical solution, after the fifth communication apparatus receives the tenth information used to request the AI computing result of the service, the fifth communication apparatus may determine, based on the tenth information, the N functional entities that provide the AI computing result, and subsequently the fifth communication apparatus may send the AI computing task information to the N functional entities, so that the N functional entities send the AI computing result to a first communication apparatus based on the AI computing task information. In other words, the service requested by the first communication apparatus may be provided by the N functional entities. The N functional entities may be deployed on (and/or connected to) one or more communication apparatuses, that is, data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

Optionally, after receiving the tenth information used to request the AI computing result of the service, the fifth communication apparatus first generates an AI computing task, and then sends the AI computing task information to the N functional entities, where the AI computing task information includes the N functional entities used to provide the AI computing result.

Optionally, the tenth information received by the fifth communication apparatus is used to request the AI computing result of the service, and the fifth communication apparatus can provide the AI computing result in a plurality of manners, that is, the fifth communication apparatus may provide a service of an AIaaS type. Correspondingly, in the eighth aspect and a related implementation process, the fourth communication apparatus may be understood as an AIMF, an AIMF node/module/network element, or the like.

In a possible implementation of the tenth aspect, the method further includes:
The fifth communication apparatus sends the AI computing task information to the second communication apparatus.

Alternatively, the fifth communication apparatus receives the AI computing result from the N functional entities, and sends the AI computing result to the second communication apparatus or the first communication apparatus.

Based on the foregoing technical solution, the fifth communication apparatus may further enable, in the foregoing plurality of manners, the first communication apparatus to obtain the AI computing result from the N functional entities, or the second communication apparatus to learn of an execution result of an AI computing task.

Optionally, the AI computing task information includes at least one of the following: a forwarding path of the AI computing result in the N functional entities, identifiers of the N functional entities, AI model information, and AI training set information.

Optionally, the AI computing result includes a model parameter of an AI model and/or AI data.

An eleventh aspect of this application provides a communication apparatus. The communication apparatus may be a first communication apparatus or some components (for example, a processor, a chip, a chip system, a logic module, or software) in a first communication apparatus. The apparatus includes a transceiver unit and a processing unit. The apparatus includes the transceiver unit and the processing unit. The processing unit is configured to determine first information. The transceiver unit is configured to send the first information to a second communication apparatus, where the first information is used to request a service, the first information is used to determine N functional entities that provide the service, and N is a positive integer. The transceiver unit is further configured to receive data of the service from the N functional entities.

A twelfth aspect of this application provides a communication apparatus. The communication apparatus may be a second communication apparatus or some components (for example, a processor, a chip, a chip system, a logic module, or software) in a second communication apparatus. The apparatus includes a transceiver unit and a processing unit. The apparatus includes the transceiver unit and the processing unit. The transceiver unit is configured to receive first information from a first communication apparatus, where the first information is used to request a service, the first information is used to determine N functional entities that provide the service, and N is a positive integer. The processing unit is configured to determine second information. The transceiver unit is further configured to send the second information to the N functional entities, where the second information indicates to provide the service for the first communication apparatus.

A thirteenth aspect of this application provides a communication apparatus. The communication apparatus may be a second communication apparatus or some components (for example, a processor, a chip, a chip system, a logic module, or software) in a second communication apparatus. The apparatus includes a transceiver unit and a processing unit. The apparatus includes the transceiver unit and the processing unit. The transceiver unit is configured to receive first information from a first communication apparatus, where the first information is used to request a service, the first information includes type information of the service, and the type information of the service indicates that a type of the service is computing as a service. The processing unit is configured to determine sixth information. The transceiver unit is further configured to send the sixth information to a third communication apparatus based on the first information, where the sixth information is used to request resource status information of one or more functional entities. The transceiver unit is further configured to receive seventh information from the third communication apparatus, where the seventh information indicates resource status information of the one or more functional entities, and the first information and the seventh information are used to determine N functional entities among the one or more functional entities. The transceiver unit is further configured to send second information to the N functional entities, where the second information indicates to provide the service for the first communication apparatus.

A fourteenth aspect of this application provides a communication apparatus. The communication apparatus may be a third communication apparatus or some components (for example, a processor, a chip, a chip system, a logic module, or software) in a third communication apparatus. The apparatus includes a transceiver unit and a processing unit. The apparatus includes the transceiver unit and the processing unit. The transceiver unit is configured to receive sixth information from a second communication apparatus, where the sixth information is used to request resource status information of one or more functional entities. The processing unit is configured to determine seventh information. The transceiver unit is further configured to send seventh information to the second communication apparatus, where the seventh information indicates resource status information of the one or more functional entities, and the seventh information is used to determine N functional entities among the one or more functional entities.

A fifteenth aspect of this application provides a communication apparatus. The communication apparatus may be a second communication apparatus or some components (for example, a processor, a chip, a chip system, a logic module, or software) in a second communication apparatus. The apparatus includes a transceiver unit and a processing unit. The apparatus includes the transceiver unit and the processing unit. The transceiver unit is configured to receive first information from a first communication apparatus, where the first information is used to request a service, the first information includes type information of the service, and the type information of the service indicates that a type of the service is AI as a service. The processing unit is configured to determine eighth information based on the first information. The transceiver unit is further configured to send the eighth information to a third communication apparatus, where the eighth information is used to request AI data of the service, the eighth information is used to determine N functional entities that provide the AI data, and N is a positive integer.

A sixteenth aspect of this application provides a communication apparatus. The communication apparatus may be a third communication apparatus or some components (for example, a processor, a chip, a chip system, a logic module, or software) in a third communication apparatus. The apparatus includes a transceiver unit and a processing unit. The apparatus includes the transceiver unit and the processing unit. The transceiver unit is configured to receive eighth information from a second communication apparatus, where the eighth information is used to request AI data of a service, the eighth information is used to determine N functional entities that provide the AI data, and N is a positive integer. The transceiver unit is further configured to receive the AI data from the N functional entities, and send the AI data to the second communication apparatus. Alternatively, the processing unit is configured to determine pipeline orchestration information; and the transceiver unit is further configured to send the pipeline orchestration information to the second communication apparatus, where the pipeline orchestration information includes a forwarding path of the AI data in the N functional entities and/or identifiers of the N functional entities. Alternatively, the third communication apparatus sends the pipeline orchestration information to the N functional entities.

A seventeenth aspect of this application provides a communication apparatus. The communication apparatus may be a second communication apparatus or some components (for example, a processor, a chip, a chip system, a logic module, or software) in a second communication apparatus. The apparatus includes a transceiver unit and a processing unit. The apparatus includes the transceiver unit and the processing unit. The transceiver unit is configured to receive first information from a first communication apparatus, where the first information is used to request a service, the first information includes type information of the service, and the type information of the service indicates that a type of the service is AI as a service. The processing unit is configured to determine ninth information based on the first information. The transceiver unit is further configured to send the ninth information to a fourth communication apparatus, where the ninth information is used to request an AI computing result of the service; and/or the ninth information is used to determine N functional entities that provide the AI computing result, and N is a positive integer.

An eighteenth aspect of this application provides a communication apparatus. The communication apparatus may be a fourth communication apparatus or some components (for example, a processor, a chip, a chip system, a logic module, or software) in a fourth communication apparatus. The apparatus includes a transceiver unit and a processing unit. The apparatus includes the transceiver unit and the processing unit. The transceiver unit is configured to receive ninth information from a second communication apparatus, where the ninth information is used to request an AI computing result of the service; and/or the ninth information is used to determine N functional entities that provide the AI computing result, and N is a positive integer. The transceiver unit is further configured to determine AI computing task information. The transceiver unit is further configured to send the AI computing task information to the N functional entities, where the AI computing task information indicates task information for providing the AI computing result.

A nineteenth aspect of this application provides a communication apparatus. The communication apparatus may be a second communication apparatus or some components (for example, a processor, a chip, a chip system, a logic module, or software) in a second communication apparatus. The apparatus includes a transceiver unit and a processing unit. The apparatus includes the transceiver unit and the processing unit. The transceiver unit is configured to receive first information from a first communication apparatus, where the first information is used to request a service, the first information includes type information of the service, and the type information of the service indicates that a type of the service is computing as a service. The processing unit is configured to determine tenth information based on the first information. The transceiver unit is further configured to send tenth information to a fifth communication apparatus, where the tenth information is used to request an AI computing result of the service; and/or the tenth information is used to determine N functional entities that provide the AI computing result, and N is a positive integer.

A twentieth aspect of this application provides a communication apparatus. The communication apparatus may be a fifth communication apparatus or some components (for example, a processor, a chip, a chip system, a logic module, or software) in a fifth communication apparatus. The apparatus includes a transceiver unit and a processing unit. The apparatus includes the transceiver unit and the processing unit. The transceiver unit is configured to receive tenth information from a second communication apparatus, where the tenth information is used to request an AI computing result of a service; and/or the tenth information is used to determine N functional entities that provide the AI computing result, and N is a positive integer. The processing unit is configured to determine AI computing task information. The transceiver unit is further configured to send the AI computing task information to the N functional entities, where the AI computing task information indicates task information for providing the AI computing result.

A twenty-first aspect of this application provides a communication apparatus. The communication apparatus includes at least one processor. The at least one processor is coupled to a memory, the memory is configured to store a program or instructions, and the at least one processor is configured to execute the program or the instructions, so that the apparatus implements the method according to any possible implementation of any one of the first aspect to the tenth aspect.

A twenty-second aspect of this application provides a communication apparatus. The communication apparatus includes at least one logic circuit and an input/output interface. The logic circuit is configured to perform the method according to any possible implementation of any one of the first aspect to the tenth aspect.

A twenty-third aspect of this application provides a communication system. The communication system includes the foregoing first communication apparatus and the foregoing second communication apparatus.

Optionally, the communication system further includes at least one of the foregoing third communication apparatus, the foregoing fourth communication apparatus, and the foregoing fifth communication apparatus.

Optionally, the communication system further includes the foregoing N functional entities.

A twenty-fourth aspect of this application provides a computer-readable storage medium. The storage medium is configured to store one or more computer-executable instructions. When the computer-executable instructions are executed by a processor, the processor performs the method according to any possible implementation of any one of the first aspect to the tenth aspect.

A twenty-fifth aspect of this application provides a computer program product (or referred to as a computer program). When the computer program in the computer program product is executed by a processor, the processor performs the method according to any possible implementation of any one of the first aspect to the tenth aspect.

A twenty-sixth aspect of this application provides a chip system. The chip system includes at least one processor, configured to support a communication apparatus in implementing the method according to any possible implementation of any one of the first aspect to the tenth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effect brought by any design manner in the eleventh aspect to the twenty-sixth aspect, refer to technical effect brought by different design manners in the first aspect to the tenth aspect. Details are not described herein again.

### BRIEF DESCRIPTION OF DRAWINGS

FIG. 1 is a diagram of a communication system according to this application;
FIG. 2 is another diagram of a communication system according to this application;
FIG. 3 is a diagram of a communication method according to this application;
FIG. 4a is another diagram of a communication method according to this application;
FIG. 4b is a diagram of a communication architecture according to this application;
FIG. 4c is another diagram of a communication architecture according to this application;
FIG. 5a is another diagram of a communication method according to this application;
FIG. 5b is another diagram of a communication method according to this application;
FIG. 6 is another diagram of a communication method according to this application;
FIG. 7 is another diagram of a communication method according to this application;
FIG. 8 is another diagram of a communication method according to this application;
FIG. 9 is another diagram of a communication method according to this application;
FIG. 10 is a diagram of a communication apparatus according to this application;
FIG. 11 is another diagram of a communication apparatus according to this application;
FIG. 12 is another diagram of a communication apparatus according to this application; and
FIG. 13 is another diagram of a communication apparatus according to this application.

### DESCRIPTION OF EMBODIMENTS

First, some terms in embodiments of this application are explained and described, to facilitate understanding of a person skilled in the art.
(1) In this application, "indicating" may include "directly indicating" and "indirectly indicating". When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, protocol-specified), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, protocol-predefined, or may be configured by a transmitting end device by sending configuration information to a receiving end device. The configuration information may include, for example but not limited to, one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

(2) The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(3) "Sending" and "receiving" in embodiments of this application indicate signal transfer directions. For example, "sending information to a device X" may be understood as that a destination end of the information is the device X, and may include direct sending through an air interface, or indirect sending by another unit or module through an air interface. "Receiving information from a device Y" may be understood as that a source end of the information is the device Y, and may include direct receiving from the device Y through an air interface, or indirect receiving from the device Y from another unit or module through an air interface. "Sending" may also be understood as "outputting" of a chip interface, and "receiving" may also be understood as "inputting" of the chip interface.

A communication process between an entity A and an entity B is used as an example. In this application, that an entity A sends information to an entity B may be that A directly sends the information to B, or may be that A indirectly sends the information to B through another entity. Similarly, that the entity B receives information from the entity A may be that the entity B directly receives the information sent by the entity A, or may be that the entity B indirectly receives the information sent by the entity A through another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

(4) Protocol data unit session (protocol data unit session, PDU Session): The protocol data unit (protocol data unit, PDU) session is a carrier of a PDU service.

The terminal device being user equipment (user equipment, UE) is used as an example. A PDU connectivity service may be a service of exchanging a PDU data packet between the UE and an external data network (data network, DN), and the PDU connectivity service is implemented by initiating establishment of the PDU session by the UE. A PDU session being established means that a data transmission channel between the UE and the DN is established. A transmission process of a user plane tunnel of the PDU session includes a connection process such as a radio (radio) interface between the user equipment and an access network (UE-AN), an N3 interface between the access network and a user plane function (AN-UPF), and an N6 interface between the user plane function and the data network (UPF-DN). A PDU session in 5G includes one or more attributes such as S-NSSAI, a data network name (data network name, DNN), a PDU session (type), a service and session continuity mode (service and session continuity mode, SSC Mode), a PDU session identifier (ID), user plane security enforcement information (user plane security enforcement information), and a multi-access PDU connectivity service (multi-access PDU connectivity Service).

(5) Computing power network: may be a new information infrastructure that allocates on demand and flexibly schedules computing resources, storage resources, and network resources among a cloud, an edge, and a device based on service requirements. The computing power network is essentially a computing power resource service. In the future, enterprise customers or individual users not only need networks and clouds, but also need to flexibly schedule computing tasks to appropriate places. The computing power network includes three components: "computing", "network", and "brain". "Computing" is used to produce computing power, "computing" is used to be connected to computing power, and "brain" is used to uniformly sense, orchestrate, schedule, and coordinate "computing power in the network".

Optionally, the computing power network has other names, for example, different names such as a computing-aware network (computing-aware network, CAN), a computing first network or computing force network (computing first network or computing force network), a computing first network (computing first network, CFN), and a computing power network (computing power network, CPN).

(6) Computing power: is a computing capability (computing power). As defined in the China Computing Power White Paper (2022), the computing power is a capability of servers in data centers to process data and output results. Therefore, the computing power is defined as a computing capability of a target result output by processing information data in a broad sense. The computing power is defined as maximum floating-point operations per second (floating-point operations per second, FLOPS) that a computer can achieve in a narrow sense. A unit of the computing power is an indicator and a benchmark for measuring strength of the computing power. Currently, there are a plurality of different measurement methods, commonly, including million instructions per second (million instructions per second, MIPS), dhrystone million instructions executed per second (dhrystone million instructions executed per second, DMIPS), operations per second (operations per second, OPS), floating-point operations per second (floating-point operations per second, FLOPS), hash per second (hash per second, Hash/s), and the like. The unit of FLOPS has been considered as one of the main indicators for measuring a computing speed of the computer.

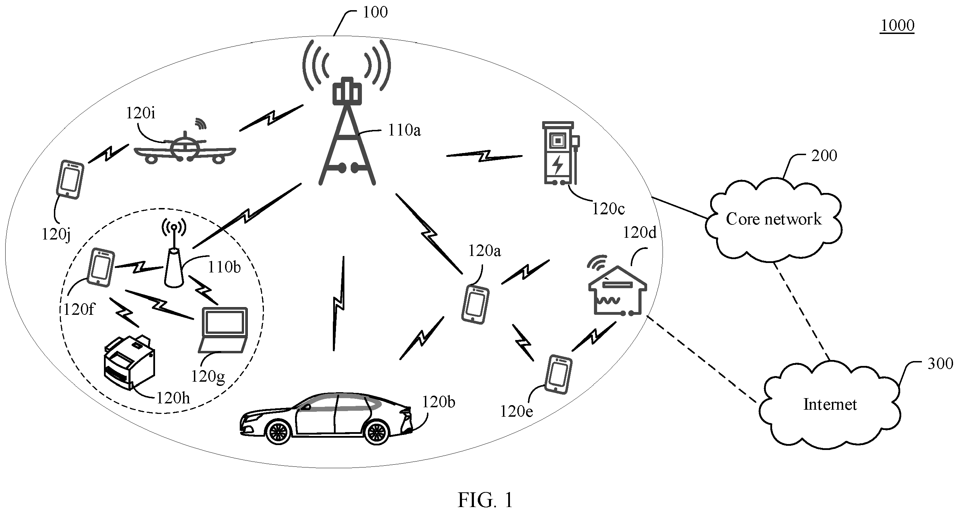

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, a new radio (new radio, NR) system, and a future radio access system defined in a 3rd generation partnership project (3rd generation partnership project, 3GPP). The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a media access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU-control plane and a CU-user plane.

In different systems, the RAN node may have different names. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented through a software module, a hardware module, or a combination of a software module and a hardware module.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1 below.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

For ease of description, the following is described by using an example in which the base station is used as a RAN node.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be at fixed locations, or may be mobile. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between a base station and a terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In recent years, as industries such as healthcare, factories, ports, coal mines, and government enterprises accelerate digital transformation, computing and communication are becoming core and basic capabilities for enabling digital-intelligent transformation of the industries. Therefore, operators propose a concept of computing power network. A meaning of the computing power network may be that the network senses ubiquitous computing and services, and schedules computing tasks to optimal computing execution nodes for processing, improving utilization efficiency of network resources and computing resources, providing low-latency and high-reliability services for users, and ensuring consistency of user experience. In addition, computing services may be expanded to various types of services such as artificial intelligence (artificial intelligence, AI) services and data services.

At the same time, there are requirements of a 6th generation (6th generation, 6G) network and future services, for example, low latency requirements of immersive services such as extended reality (extended reality, XR) and holography, and real-time processing requirements of massive data of intelligent services such as robots, agents, and AI generated content (AI generated content, AIGC) large models. In addition, 6G services may present immersive and intelligent characteristics. The 6G network needs to support AI resource scheduling and processing of an ultra-large data amount to reduce a computing amount and energy consumption of terminals, meeting lighter, more immersive, and more intelligent terminal capability requirements. Therefore, the 6G network architecture may shift from being "connection-centric" to "task-centric". Conventional "connection-centric" network architectures aim to provide connection channels required for data communication between terminals, as well as between terminals and application servers, and provide corresponding life cycle management mechanisms and communication QoS guarantees.

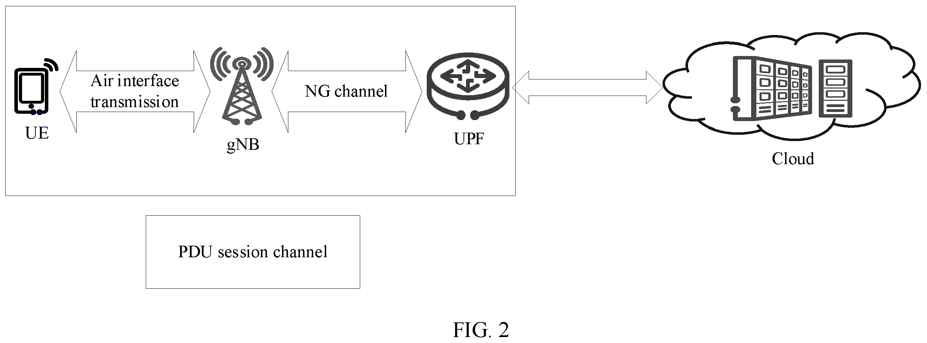

FIG. 2 is used as an example. A current connection establishment method in a 5G network, namely, a PDU session establishment procedure, is to provide a transmission channel for data transmission between UE and an application server (application server) located in a DN, including establishing a data radio bearer (data radio bearer, DRB) between the UE and a RAN and an NG interface user plane tunnel (NG-U tunnel) between the RAN and a UPF of a core network, and providing corresponding QoS guarantee. However, a "task-centric" network architecture not only requires the network to provide connectivity services, but also requires the network to coordinate and allocate computing power, connections, algorithms, and data resources of network nodes to jointly achieve a specific goal. In a 6G network, computing power, storage resources, and multi-node computing power, algorithms, and data coordination mechanisms are introduced to provide various services, for example, data services, computing services, AI services, and conventional communication connectivity services.

Currently, for a communication apparatus in a communication network, in addition to signal transmission and reception capabilities, the communication apparatus may also have the data processing capability. Usually, the data processing capability may provide computing power support for the foregoing data communication process. For example, the data processing capability may provide computing power support for the signal transmission and reception capability of the node, to determine time-frequency domain resources or the like for signal transmission and reception, and implement communication between the communication apparatus and other communication apparatuses through the transmission and reception process.

However, in addition to processing signals received and sent in the communication network, the communication apparatus may also handle other processing. Therefore, how to improve utilization of the data processing capability of the communication apparatus is an urgent technical problem to be resolved.

A 5G network is used as an example. In the 5G network, a PDU session is established to provide a transmission channel for data transmission between UE and an application server located in a data network, and corresponding QoS guarantee is provided only for air interface transmission between the UE and a RAN and a user plane channel between the RAN and a UPF. Network element nodes in the network does not provide QoS guarantee for the UE of other types of services such as data or computing. In addition, for network internal services such as wireless sensing and AI services for optimizing wireless network performance, transmission, computing power, AI, and data resources on the UE, the RAN network element, and the CN network element need to be coordinately controlled to complete these services with a large computing amount or a large data amount. Similarly, for application services outside a network such as XR and cloud game rendering, connections, computing power, AI, and data resources between terminals, edge clouds, and center clouds also need to be coordinately scheduled and configured to support low-latency and large-capacity services. However, a current wireless network architecture supports only a pure communication connection function, and only guarantees communication QoS. It neither supports providing AI, data, or computing services, nor does it support coordinated scheduling of multi-element resources such as connections, computing power, AI, and data to complete services. Therefore, a unified network architecture needs to be designed to provide various services, and can centrally manage and control the services to guarantee QoS.

To resolve the foregoing problem, this application provides a communication method and a related device, enabling a communication apparatus to provide services based on requests from other communication apparatuses. By enabling cooperation among different communication apparatuses, utilization of the data processing capability of a communication apparatus can be improved.

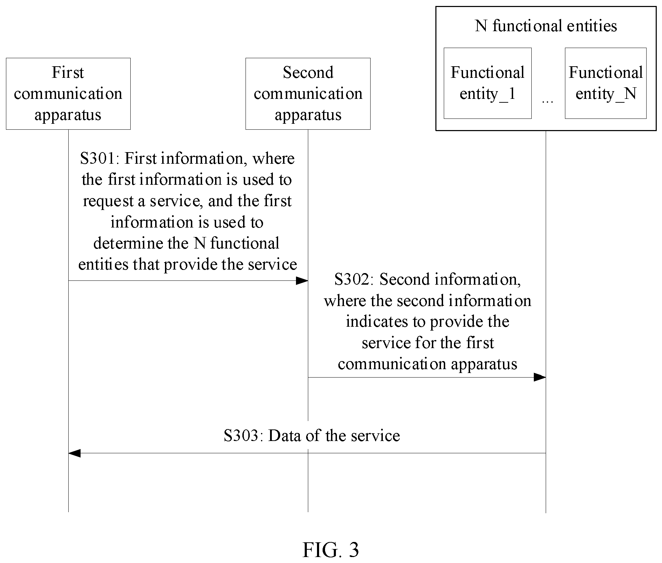

FIG. 3 is an implementation diagram of a communication method according to this application. The method includes the following steps.

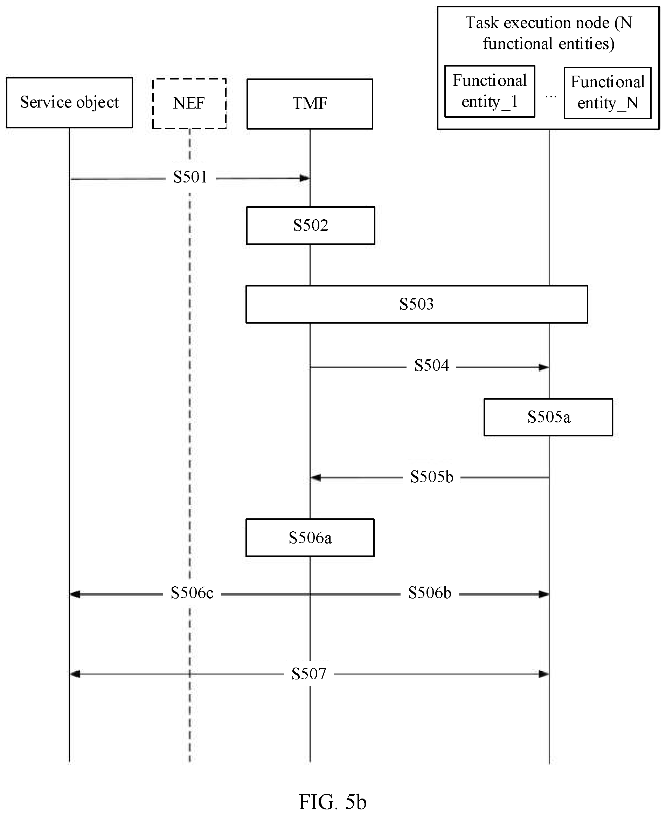

It should be noted that in FIG. 3, an example in which a first communication apparatus and a second communication apparatus are used as execution bodies of the interaction diagram is used to illustrate the method. However, the execution bodies of the interaction diagram are not limited in this application. For example, in FIG. 3 and the following other accompanying drawings (for example, FIG. 5b, FIG. 6, FIG. 7, FIG. 8, and FIG. 9), the execution body of the method may be replaced with a chip, a chip system, a processor, a logic module, software, or the like in the communication apparatus.

The method shown in FIG. 3 may include S301, S302, and S303 below.

S301: The first communication apparatus sends first information, and correspondingly the second communication apparatus receives the first information, where the first information is used to request a service.

In S301, the first information sent by the first communication apparatus may be used to determine N functional entities that provide the service, where N is a positive integer. In other words, the second communication apparatus receives the first information, and may determine, based on the first information, the N functional entities that provide the service.

In a possible implementation, the first information sent by the first communication apparatus in S301 includes at least one of the following information A to information C:
information A: type information of the service, where the information A may indicate a type of the service, including at least one of network as a service (network as a service, NaaS), computing as a service (computing as a service, CaaS), AI as a service (AI as a service, AIaaS), and data as a service (data as a service, DaaS);
information B: content information of the service, where the information B may indicate at least one of a requirement for a network resource and a QoS requirement for the service, where for example, the requirement for the network resource may include a requirement for a transmission resource, a computing resource, a data resource, or an AI model resource; or for another example, the QoS requirement for the service may include one or more of a requirement for a computing latency, a requirement for a transmission latency, or the like; and
information C: feedback trigger condition information of the service, where the information C may indicate a feedback trigger condition for QoS fulfillment status.

Optionally, in the information C, the feedback trigger condition for QoS fulfillment status includes a QoS deviation degree and/or a threshold of a QoS deviation value. Specifically, the feedback trigger condition information, of the service, included in the first information may indicate the QoS deviation degree and/or the threshold of the QoS deviation value. When the second communication apparatus can determine, based on a QoS status of the service provided for the first communication apparatus, and the QoS deviation degree and/or the threshold of the QoS deviation value, that the trigger condition indicated by the information C is met, the second communication apparatus feeds back the QoS status of the service to the first communication apparatus (or the second communication apparatus adjusts the QoS requirement for the service, and feeds back the adjusted QoS requirement to the first communication apparatus).

The first information used to request the service may include at least one of the information A to the information C, so that flexibility of implementing the solution can be improved. In addition, at least one of the information A to the information C may also represent requested service-related information, so that the first communication apparatus obtains the corresponding service.

In a possible implementation, in S301, a process in which the first communication apparatus sends the first information to the second communication apparatus may include: The first communication apparatus sends the first information to the second communication apparatus through a network exposure function (network exposure function, NEF). Specifically, when the first communication apparatus is an application (where for example, the application is a Client APP deployed on a terminal device or a Server APP deployed on an application server), a communication process between the first communication apparatus and the second communication apparatus may be forwarded through the NEF. That is, the first communication apparatus may send, to the second communication apparatus through the NEF, the first information used to request the service.

S302: The second communication apparatus sends second information, and correspondingly the N functional entities receive the second information, where the second information indicates to provide the service for the first communication apparatus.

The second communication apparatus determines, based on the first information, the N functional entities that provide the service, and sends the second information to the determined N functional entities. After receiving the second information, the N functional entities may determine, based on the second information, to provide the service for the first communication apparatus, and send data of the service in S303. The second information indicates to provide the service for the first communication apparatus.

In a possible implementation, before S302, the method further includes: The second communication apparatus obtains third information, where the third information indicates resource status information of M functional entities, the M functional entities include the N functional entities, and M is greater than or equal to N; and correspondingly the second communication apparatus may be configured to determine the N functional entities in the M functional entities based on the first information and the third information. Specifically, the second communication apparatus may further obtain the third information indicating the resource status information of the M functional entities, and determine, based on the first information and the third information, the N functional entities that provide the service for the first communication apparatus in the M functional entities, so that the second communication apparatus can determine, in the M functional entities, the N functional entities that meet a requirement for the service.

Optionally, the second communication apparatus may obtain the third information in a plurality of manners. For example, the second communication apparatus may separately receive the resource status information from the M functional entities; or the second communication apparatus may receive information from one or more management devices, and obtain the third information based on the received information, where the one or more management devices are configured to manage/control/obtain the resource status information of the M functional entities.

Optionally, the third information may be information periodically obtained by the second communication apparatus, or may be condition-triggered information obtained by the second communication apparatus (for example, a condition in which a resource status of one or more functional entities changes or a change value exceeds a threshold), or may be implemented in another manner. This is not limited herein.

In a possible implementation, in S302, the second information sent by the second communication apparatus includes at least one of the following information 1 to information 4:
information 1: identifier of a task;
information 2: type of the task;
information 3: QoS requirement of the task; and
information 4: a feedback trigger condition for QoS fulfillment status of the task.

In the foregoing information 1 to information 4, the task is used to provide the service.

Specifically, the second information sent by the second communication apparatus may include at least one of the foregoing task-related information, and the task is used to provide the service. In other words, after the second communication apparatus obtains the first information for requesting the service in S301, the second communication apparatus may send, to the N functional entities by using the second information in S302, the task indicating to provide the service. In this manner, the service requested by the first communication apparatus can be released in a form of a task, to adapt to a "task-centric" network.

Optionally, the "task-centric" network may be referred to as an XaaS network, and X may be one or more of a network (network), computing (computing), AI, and data (data).

Optionally, the second information indicates to provide the service for the first communication apparatus. When the second information includes at least one of the foregoing task-related information, the second communication apparatus may provide the service in a form of a task. Correspondingly, in the second aspect and a related implementation process, the second communication apparatus may be understood as a task management function (task management function, TMF), a TMF node/module/network element, or the like.

In a possible implementation, the second information includes the information 3, and the QoS requirement of the task may include one or more QoS requirements of the N functional entities. Specifically, the QoS requirement of the task may include the QoS requirement for the service provided by the N functional entities. In this manner, when the service provided by the N functional entities meets the QoS requirement for providing the service, the QoS requirement of the task can be guaranteed.

Optionally, in the one or more QoS requirements of the N functional entities included in the information 3 (namely, the QoS requirement of the task), there may be a plurality of implementations of a quantity of the one or more QoS requirements and a value of N. For example, when different functional entities have different QoS requirements, a quantity of the QoS requirements may be equal to the value of N. For another example, when QoS requirements of at least two different functional entities are the same, a quantity of the QoS requirements may be less than the value of N.

Similarly, for the information 4 included in the second information, the feedback trigger condition for QoS fulfillment status of the task may include a feedback trigger condition for the fulfillment status of the one or more QoS requirements of the N functional entities.

In a possible implementation, in the information 1 to the information 4, the task meets at least one of the following:
the first information is used to determine the identifier of the task;
the first information includes type information of the service and/or content information of the service, and the type information of the service and/or the content information of the service are/is used to determine the type of the task, where the type of the task includes at least one of a computing offloading task, an AI task, and a data collection task;
the first information includes content information of the service, and the content information of the service is used to determine the QoS requirement of the task; and
the first information includes feedback trigger condition information of the service, and the feedback trigger condition information of the service is used to determine the feedback trigger condition for QoS fulfillment status of the task.

Specifically, the task-related information indicated by the second information may be determined by using the first information for requesting the service, so that the task indicated by the second information of the N functional entities can provide the data required by the service.

Optionally, in S302, the second communication apparatus may send the second information to the N functional entities in a plurality of manners. For example, the second communication apparatus may separately send the second information to the N functional entities, that is, each functional entity obtains the second information; or the second information may include N pieces of same information, and the second communication apparatus separately sends the N pieces of same information to the N functional entities, that is, each functional entity obtains one of the N pieces of information. Optionally, if the QoS requirement of the task includes the one or more QoS requirements of the N functional entities, and QoS requirements of the N different functional entities are different, the second information may include N pieces of different information, and information corresponding to a specific functional entity in the N functional entities is separately sent to the N functional entities. If QoS requirements of at least two different functional entities in the QoS requirements of the N functional entities are the same, but QoS requirements of other functional entities are different, for the at least two different functional entities, the second communication apparatus may send same information to the at least two functional entities.

Optionally, in S302, in a process in which the second communication apparatus sends the second information to the N functional entities, the second communication apparatus may perform communication through a direct link. For example, the second communication apparatus separately communicates with the N functional entities through the direct link, to send the second information. Alternatively, the second communication apparatus may perform communication in another manner. For example, the second communication apparatus communicates with the N functional entities through one or more relay nodes (or forwarding nodes), to send the second information. For another example, the second communication apparatus may communicate with a part of the N functional entities through one or more relay nodes (or forwarding nodes), and communicate with the other part of the N functional entities through a direct link, to send the second information.

S303: The N functional entities send the data of the service, and correspondingly the first communication apparatus receives the data of the service.

In this application, terms such as a functional entity, an entity, a logic entity, and a physical entity may be replaced with each other.

It should be noted that there may be one or more communication apparatuses deployed on (and/or connected to) the N functional entities, and there may be a plurality of relationships between a quantity of the communication apparatuses and the value of N. The communication apparatus connected to the N functional entities is used as an example. For example, when different functional entities are connected to different communication apparatuses, the quantity of the communication apparatuses may be equal to N. For another example, when at least two different functional entities are connected to a same communication apparatus, the quantity of the communication apparatuses may be less than N. For another example, when one of the N functional entities is connected to two or more communication apparatuses, the quantity of the communication apparatuses may be greater than N.

Optionally, in a process in which the first communication apparatus receives the data of the service from the N functional entities in S303, the first communication apparatus may perform communication through a direct link. For example, the first communication apparatus separately communicates with the N functional entities through the direct link, to receive the data of the service. Alternatively, the first communication apparatus may perform communication in another manner. For example, the first communication apparatus communicates with the N functional entities through one or more relay nodes (or forwarding nodes), to receive the data of the service. For another example, the first communication apparatus may communicate with a part of the N functional entities through one or more relay nodes (or forwarding nodes), and communicate with the other part of the N functional entities through a direct link, to receive the data of the service. For another example, the first communication apparatus communicates with the N functional entities through a wireless link and/or a wired link, to receive the data of the service.

Optionally, in addition to receiving the data from the N functional entities, the first communication apparatus may send the data to one or more of the N functional entities, so that the first communication apparatus obtains the service through data exchange.

Based on the technical solution shown in FIG. 3, after the first communication apparatus sends the first information used to request the service in S301, the first communication apparatus may receive the data of the service from the N functional entities in S303, and the first information is used by the second communication apparatus to determine the N functional entities that provide the service. In other words, the service requested by the first communication apparatus may be provided by the N functional entities. The N functional entities may be deployed on (and/or connected to) one or more communication apparatuses, that is, the data for the service requested by the first communication apparatus can be provided through the one or more communication apparatuses in S303. Therefore, in a communication system, the one or more communication apparatuses can provide services based on requests of other communication apparatuses. By enabling cooperation among different communication apparatuses, utilization of the data processing capability of the communication apparatus can be improved.

Optionally, in a possible implementation of the solution shown in FIG. 3, the method further includes: The first communication apparatus receives indication information indicating the QoS status information of the service. Specifically, the first communication apparatus may further receive the indication information, so that the first communication apparatus can know the QoS status of the service.

Optionally, the indication information indicating the QoS status information of the service may be from the second communication apparatus, one or more of the N functional entities, or another communication apparatus (for example, a third communication apparatus, a fourth communication apparatus, or a fifth communication apparatus) mentioned below. For example, if the indication information indicating the QoS status information of the service is from a first functional entity in the N functional entities, the indication information may include first QoS status information of the first functional entity; or if the indication information indicating the QoS status information of the service is from a first functional entity and a second functional entity in the N functional entities, the indication information includes first QoS status information of the first functional entity and second QoS status information of the second functional entity.

Optionally, the indication information indicating the QoS status information of the service may be information sent periodically, may be condition-triggered information (where for example, one or more QoS statuses corresponding to one or more of the N functional entities are lower than a threshold, or an overall QoS weighted value of the N functional entities is lower than a threshold), or the like.

In a possible implementation of the solution shown in FIG. 3, the method further includes: The second communication apparatus receives fourth information from the N functional entities, where the fourth information indicates the QoS fulfillment status of the service. The second communication apparatus sends fifth information to the N functional entities and/or the first communication apparatus based on the fourth information, where the fifth information is used to update the QoS requirement of the task. Specifically, the second communication apparatus may further receive the fourth information, from the N functional entities, indicating the QoS fulfillment status of the service, and the second communication apparatus may further send, based on the fourth information, the fifth information used to update the QoS requirement of the task, to implement policy optimization of the QoS requirement of the task.

The following describes in detail the technical solutions provided in this application with reference to more accompanying drawings.

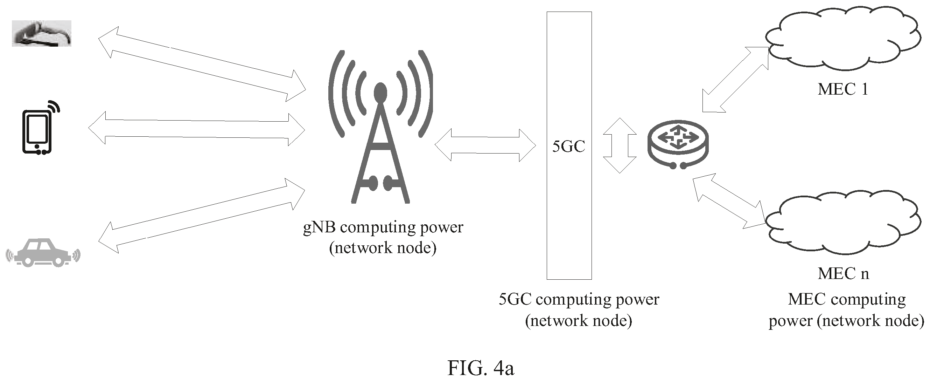

In an implementation example, as shown in FIG. 4a, a communication apparatus (for example, the first communication apparatus in the foregoing embodiment) that requests to provide a service may be the UE in FIG. 2, and the communication apparatus that provides the service may include various "network nodes (namely, the N functional entities in the foregoing embodiment)" in FIG. 4a. The network nodes may include at least one of a gNB on an access network side, a core network device, and a mobile edge computing (mobile edge computing, MEC) device.

For example, in the example shown in FIG. 4a, functions of the devices are described as follows.

UE: is a terminal device that allows a user to access a network, and has a local communication capability and a specific computing capability. The computing capability is used to process a third-party application service such as XR and an AI service in a wireless network.

gNB: is a 5G base station protocol functional entity, and includes functions of a CU and/or a DU. The gNB is an interface device for a mobile device to access an internet, and internal computing power is used to process services such as AI and sensing in the network, and may also process a third-party application (3rd App) service.

Task management function (task management function, TMF): This function is deployed on a RAN side or a core network side, and orchestrates and manages resources of nodes such as a terminal, a base station, a core network, an MEC, and an edge cloud.

5G core network (5G core network, 5GC): includes an access and mobility management function (access and mobility management Function, AMF), a session management function (session management function, SMF), a UPF, and the like.

MEC: The mobile edge computing platform is deployed in a DN behind the UPF in the core network, and may exchange application-layer data with a 5G system through an N6 interface to provide a low-latency computing service. The MEC may be deployed on a base station side together with a local UPF.

It should be noted that FIG. 4a is merely an example. The technical solutions provided in this application may be applied to a plurality of communication networks, including but not limited to a 5G network, an LTE network, a 6G network, and the like shown in FIG. 4a.

It may be learned from the foregoing implementation process that the second communication apparatus may receive a request from the first communication apparatus, and determine, based on the request, the N functional entities that provide the service for the first communication apparatus. Correspondingly, when the second communication apparatus is applied to a "task-centric" network, the second communication apparatus may provide the service in a form of a task, that is, the second communication apparatus may be a module that manages the task in the network. For example, the second communication apparatus may be a task management function (task management function, TMF), a TMF node/module/network element, or the like.

Optionally, there may be a plurality of task requirements in the network. Therefore, the TMF may include one or more of a computing management function (computing management function, CMF), a data management function (data management function, DMF), an artificial intelligence management function (AI management function, AIMF), and the like.

In an implementation example, the TMF may undertake a service request from a service object inside or outside the network. For example, with the NEF serving as a service platform, the TMF may undertake a service request through the NEF and determine to provide, for a service object (namely, a service requester, for example, the first communication apparatus described above), various services, including network as a service (network as a service, NaaS), computing as a service (computing as a service, CaaS), AI as a service (AI as a service, AIaaS), and data as a service (data as a service, DaaS). The service object includes a network element in the network (for example, a RAN function, a CN function, or UE) and a third-party application (for example, Client APP or a Server APP). It may be understood that the NEF has a communication interface with the service requester and a communication interface with the network element inside the network.

In an implementation example, the TMF may manage, orchestrate, and monitor tasks that need to be completed to provide various services, including managing one or more of a computing offloading task, a data collection task, an AI task, and a conventional network connection task, orchestrating one or more of the various tasks, and monitoring and controlling a task execution process. Task monitoring and control includes sensing a QoS status of a system in the task execution process and performing corresponding adjustment. For example, the TMF orchestrates the data collection task, monitors and controls an execution process of the data collection task, senses the QoS fulfillment status of a data collection service by the system, and performs corresponding adjustment. The TMF may orchestrate the computing offloading task, monitors and controls execution of the computing task, senses the QoS fulfillment status of a computing service by the system, and performs corresponding adjustment. The TMF may also orchestrate the AI task and control execution of the AI task, and the AI task includes AI model/AI data transfer, AI model training/inference, and the like. The orchestration and execution control of the network connection task by the TMF may be a process of establishing a PDU session in an existing network and a process of providing corresponding session QoS guarantee.

In addition, the TMF may have a plurality of deployment forms. The following provides descriptions with reference to more implementation examples.

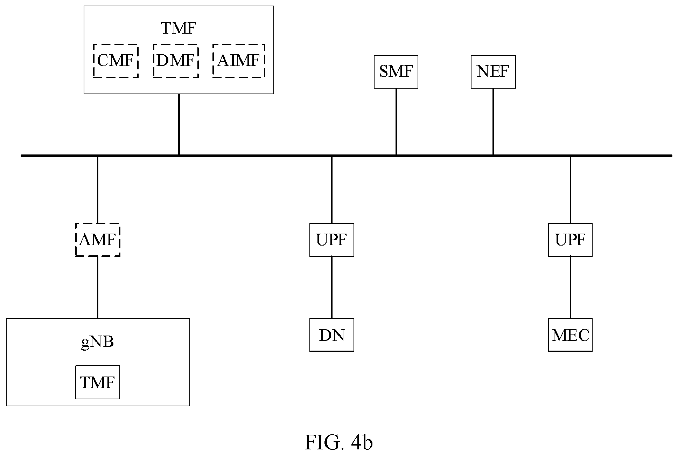

Implementation 1: As shown in FIG. 4b, the TMF may include a category-specific task management function, and may be deployed on a core network side and/or a RAN side.

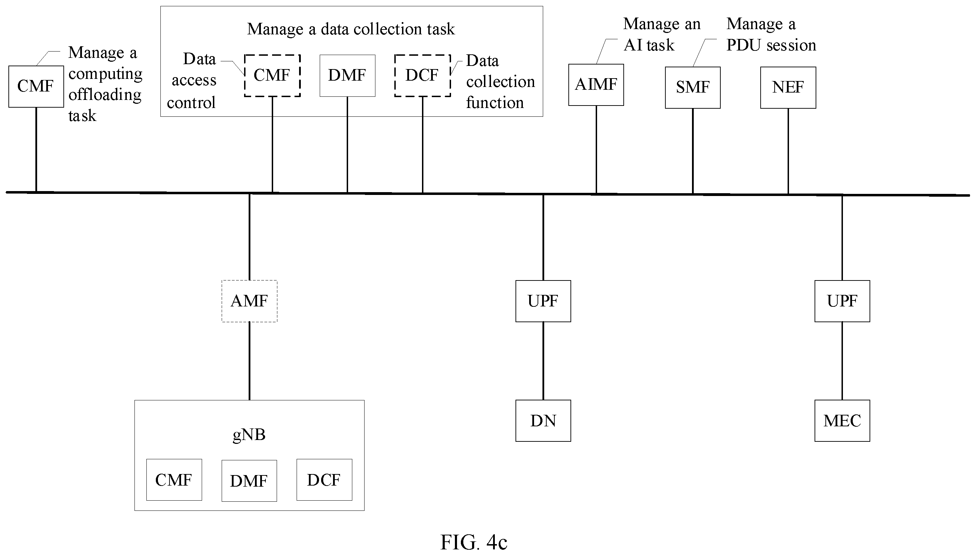

Implementation 2: As shown in FIG. 4c, the TMF may include a unified task management function, and may be deployed on a core network side and/or a RAN side.

Optionally, in FIG. 4b or FIG. 4c, the DMF may include a data collection function (data collection function, DCF) and a data access control function (data access control function, DAC). The DCF orchestrates the data collection task, monitors and controls the execution process of the data collection task, senses the QoS fulfillment status of the data collection service by the system, and performs corresponding adjustment. The DACF controls from which nodes data is to be accessed, and obtains permission to access the data of the nodes.

It should be noted that when the TMF is deployed on the core network side, the TMF may manage a functional entity that communicates with the core network side, that is, the N functional entities described above may include a functional entity deployed on a core network element, a functional entity deployed on a RAN network element, and the like. Similarly, when the TMF is deployed on the RAN side, the TMF may manage a functional entity that communicates with the RAN side, that is, the N functional entities described above may include a functional entity deployed on the RAN, a functional entity deployed on one or more terminal devices connected to the RAN, and the like.

In addition, when the TMF is deployed on the core network side and the RAN side, hierarchical scheduling may be performed. For example, a TMF deployed on the core network side may negotiate task scheduling with a TMF deployed on the RAN side. The TMF deployed on the RAN side may be responsible for managing a computing node deployed on the RAN side or a local computing node of the RAN, and the TMF deployed on the core network side may be responsible for managing an edge cloud or an MEC node close to the core network.

Optionally, in Implementation 1 or Implementation 2, the TMF may be a native function of a gNB-CU or a DU, and a protocol layer may be newly added on the RAN side to perform a TMF function, and may be above an RRC layer or parallel to the RRC layer. For various task management functions, a corresponding protocol layer may be newly added on the RAN side to perform a corresponding function. The newly added protocol layer is above the RRC layer or is parallel to the RRC layer. For example, a computing resource control (computing resource control, CRC) protocol layer corresponding to the CMF, a data resource control (data resource control, DRC) protocol layer corresponding to the DMF, and an AI resource control (AI resource control, AIRC) protocol layer corresponding to the AIMF are newly added.

Optionally, in Implementation 1 or Implementation 2, when the TMF is deployed on the RAN side, a task resource control (task resource control, TRC) protocol layer corresponding to the TMF may be added. When the TMF is deployed on the core network side, the TMF may be connected to another function through a bus.

It should be understood that the CRC protocol layer may be configured to manage a computing-related resource, the DRC protocol layer may be configured to manage a data-related resource, the AIRC may be configured to manage an AI-related resource, and the TRC may be configured to manage a task-related resource. In addition, the foregoing names such as CRC, DRC, AIRC, and TRC are merely examples, and may be replaced with other names during actual application.

For ease of understanding the architectures provided in Implementation 1 and Implementation 2, the following describes the architectures by using more implementation examples.

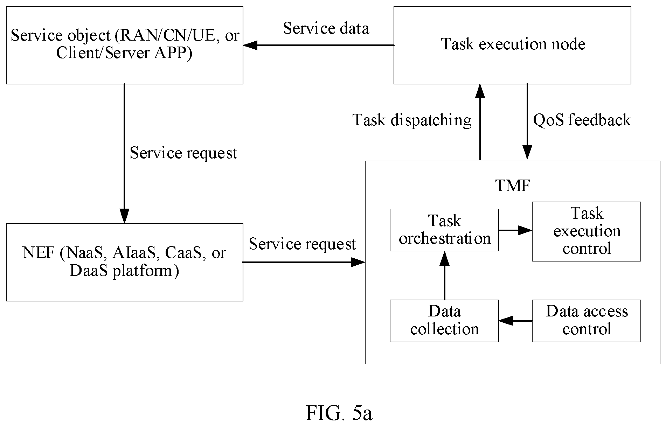

In an implementation example of Implementation 1, as shown in FIG. 5a and FIG. 5b, the first communication apparatus in the foregoing embodiment may be the service object (including but not limited to the RAN/CN/UE, the Client/Server APP, or the like) in FIG. 5a and FIG. 5b, the second communication apparatus in the foregoing embodiment may be the TMF in FIG. 5a and FIG. 5b, and the N functional entities in the foregoing embodiment may be task execution nodes in FIG. 5a.

In the solution shown in FIG. 5a, the service object may initiate a service request to the TMF (through the NEF), the TMF may perform task dispatching to the task execution node based on the service request, and the task execution node may subsequently provide service data for the service object. According to the XaaS service procedure provided in the embodiment shown in FIG. 5a, the network can generate corresponding tasks based on different service requests and execute the tasks, and ensure that QoS requirements of the tasks can be met in a task execution process.

In some implementation processes, the TMF generates a corresponding task based on a service type and service content, and generates a QoS requirement.

In some implementation processes, the TMF dispatches the task to the task execution node, and sends, to the task execution node, the QoS requirement corresponding to the task execution node and a feedback trigger condition for QoS fulfillment status of the task execution node.

In some implementation processes, the task execution node detects whether QoS is achieved, and feeds back that the QoS is not achieved or feeds back deviation degree information to the TMF and/or the service object.

It should be understood that in FIG. 5a, the service request is an example of the first information, and "task dispatching" is an example of the second information.

In an implementation example of Implementation 1, as shown in FIG. 5b, the following steps are included.

It should be noted that S501 shown in FIG. 5b may be an implementation example of S301, S504 may be an implementation example of S302, and S507 may be an implementation example of S303. In addition, other steps shown in FIG. 5b are optional steps.

S501: A service object initiates a service request (service request) to a TMF.

It may be understood that the service object may be a RAN network element, a CN network element, or UE, or may be a Client APP or a Server App. If the service object is a third-party application outside a network, the service object may initiate the service request through an NEF.

Specifically, in S501, the service request includes at least one of a service type (service type), service content (service content), and a service feedback condition (service feedback condition).

For example, the service type may be a computing service, a data service, an AI service, or a communication service type, and the service content includes a requirement for a network resource (resource demand) and a QoS requirement. The network resource includes a transmission resource, a computing resource, a data resource, or an AI model resource. Network resources required by different service requests may be different, and only a computing resource and a transmission resource are required for a computing service request. The service feedback condition includes a feedback trigger condition for QoS fulfillment status.

S502: The TMF generates a corresponding task based on the service type and the service content, and generates a QoS requirement that needs to be met to complete the task.

In an implementation example, a computing service type is used as an example. The TMF generates a computing offloading task based on a computing service type, a requirement for computing power and a transmission resource, and a QoS requirement, and may further generate a QoS requirement (referred to as computing QoS) that needs to be met to complete the computing offloading task, for example, a requirement for a computing amount or a computing latency. The TMF may generate a QoS requirement in S502 based on the QoS requirement in S501.

In an implementation example, an AI service type is used as an example. The TMF generates an AI model/AI data transfer task, an AI model training task, or an AI inference task based on an AI service type and requirements for computing power, a transmission resource, an AI resource, and a data resource, and generates a QoS requirement (referred to as AI-QoS) that needs to be met to complete the AI task, including requirements such as AI model accuracy and training/inference latency. For example, AI-QoS requirements that need to be met by federated learning include: training accuracy of 83% to 90%, a training latency of 105 to 325 ms, an uplink transmission latency of 1.05s to 3.25s, an uplink rate (without compression) of 325 Mbps to 1 Gbps, and an uplink rate (with compression) of 26.13 Mbps to 80.88 Mbps.

In an implementation example, a data service type is used as an example. The TMF generates a data collection task based on the data service type and requirements for a connection resource and a data resource, and generates QoS (referred to as data QoS) that needs to be met to complete the data collection task. Data QoS includes requirements for a data type/accuracy, a transmission latency, a transmission rate, and the like. Sensing data is used as an example. Sensing data of different types/levels has different transmission rate requirements. For example, an I/Q data rate QoS requirement is 5.2 Gbps, a spectrum information rate requirement is 1.2 Gbps, a point cloud information rate is 1.2 Mbps, and a target information rate is 40 Kbps.

S503: The TMF controls an execution process of the task, including controlling from which nodes data is to be accessed, determining network nodes (namely, the task execution node or the N functional entities) participating in task execution, and performing some or all of an authentication process for these network nodes. The TMF may further collect computing, transmission, AI, or data resource status data of the task execution node.

S504: The TMF dispatches the task to the task execution node, and delivers the QoS requirement and the feedback trigger condition for QoS fulfillment status. For QoS of different tasks, refer to S502. The trigger condition may be a QoS deviation degree and/or a threshold of a QoS deviation value. Optionally, the TMF further allocates a task identifier (task ID) to the network node.

S505a: The task execution node executes the task based on task assignment, and schedules a connection resource, a computing resource, an AI resource, or a data resource to complete the task. During this process, the task execution node monitors the QoS fulfillment status.

Optionally, when it is detected that a deviation degree between QoS (a training/inference latency, or a data transmission latency/rate) achieved by the task execution node and assigned QoS exceeds a preset threshold, the task execution node may feed back that the QoS is not achieved or feed back deviation degree information to the TMF in S505b.

S506a: The TMF monitors a QoS status in a task completion process, and adjusts a QoS policy based on the QoS status fed back by the task execution node.

Optionally, the TMF may notify the task execution node and/or the service object of the adjusted QoS policy in S506b and S506c. For example, when QoS deviation exceeds a specific negative value, the QoS requirement is adjusted to be stricter; or when QoS deviation exceeds a specific positive value, the QoS requirement is adjusted to be looser. For example, if a computing latency requirement is 10 ms and the deviation is 5 ms, the computing latency requirement is adjusted to be looser: 15 ms (that is, guarantee is provided based on the latency that can be met to the greatest extent possible). The TMF notifies the service object, so that the service object knows that original QoS requirement information needs to be adjusted and knows adjusted QoS requirement information.

S507: After completing the task dispatched by the TMF, the task execution node provides, for the service object, service data corresponding to the task.

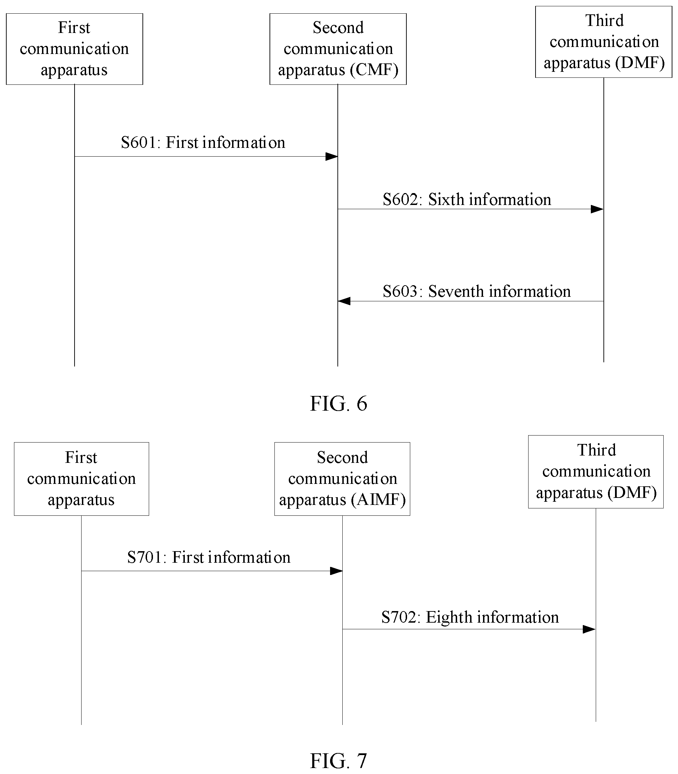

In an implementation example of Implementation 2, when the second communication apparatus is a CMF and the service type requested by the first communication apparatus is CaaS, the implementation may be implemented by using the solution shown in FIG. 6.

FIG. 6 is another implementation diagram of a communication method according to this application. The method includes the following steps.

S601: A first communication apparatus sends first information, and correspondingly a second communication apparatus receives the first information, where the first information includes type information of a service, and the type information of the service indicates that a type of the service is CaaS.

It should be noted that for an implementation process of the first information, refer to the descriptions in FIG. 3/FIG. 5b and related embodiments. For example, the first information may further include one or more of the information B, the information C, and the like described above.

Optionally, the first information received by the second communication apparatus in S601 includes type information indicating that the type of the service is CaaS, and the second communication apparatus can indicate, by using second information, N functional entities to provide a service of the CaaS type for the first communication apparatus. Correspondingly, in FIG. 6 and a related implementation process, the second communication apparatus may be understood as a CMF, a CMF node/module/network element, or the like.

S602: The second communication apparatus sends sixth information, and correspondingly a third communication apparatus receives the sixth information, where the sixth information is used to request resource status information of one or more functional entities.

It may be understood that in S602, the second communication apparatus may request, based on a computing service request indicated by the first information, computing and network status data information from the third communication apparatus by using the sixth information, where the computing and network status data information includes computing resource status data of the one or more functional entities and transmission status data of a network.

S603: The third communication apparatus sends seventh information, and correspondingly the second communication apparatus receives the seventh information, where the seventh information indicates resource status information of the one or more functional entities; and the second communication apparatus may determine the N functional entities among the one or more functional entities based on the first information and the seventh information.

Optionally, the third communication apparatus generates a computing and network status data collection task based on a computing and network status data request sent by the second communication apparatus, to obtain the computing and network status data; and the third communication apparatus may send the computing and network status data collection task to the one or more functional entities, so that the one or more functional entities report the computing and network status data information.

Optionally, after the third communication apparatus receives the resource status information of the one or more functional entities, the third communication apparatus first obtains the resource status information of the one or more functional entities, and then sends the seventh information indicating the resource status information of the one or more functional entities.

Optionally, that the third communication apparatus obtains the resource status information of the one or more functional entities includes: The third communication apparatus generates a resource status collection task, and sends the task to the one or more functional entities, so that the one or more functional entities report their own resource status information.

It should be understood that in S603, the second communication apparatus may generate a computing task allocation policy based on a computing and network status indicated by the seventh information, and notify a network node of a computing task allocated to the network node. The network node receives computing task data of a service object; and after executing the computing task to obtain a computing result, the network node returns the computing result to the service object. In other words, after S603, the second communication apparatus may determine the N functional entities among the one or more functional entities based on the first information and the seventh information, and the second communication apparatus sends the second information to the N functional entities, where the second information indicates to provide the service for the first communication apparatus. For an implementation process of the second information, refer to the descriptions in FIG. 3/FIG. 5b and related embodiments.

Optionally, the second information may further indicate a computing task allocation policy on the N functional entities.

Optionally, the first information received by the second communication apparatus in S601 may further include one or more of a requirement for a computing resource and/or a transmission resource, a QoS requirement, and a feedback trigger condition for QoS fulfillment status. In this manner, the service indicated by the second information by the second communication apparatus can meet the one or more of the items. For example, the service indicated by the second information may meet the requirement for the computing resource and/or the transmission resource, and/or the QoS requirement. For another example, when the feedback trigger condition is triggered, the service indicated by the second information may be used to feed back the QoS fulfillment status.

Optionally, the sixth information received by the third communication apparatus includes request information used to request the resource status information of the one or more functional entities, and the third communication apparatus can indicate the resource status information of the one or more functional entities by using the seventh information, that is, the third communication apparatus can provide the service of the DaaS type. Correspondingly, in FIG. 6 and a related implementation process, the third communication apparatus may be understood as a DMF, a DMF node/module/network element, or the like.

In a possible implementation, the seventh information sent by the third communication apparatus in S603 includes at least one of the following: computing resource status information of the one or more functional entities and transmission status information of a network in which the one or more functional entities are located. Specifically, the seventh information may include at least one of the foregoing items, so that the second communication apparatus can obtain a computing resource status of each functional entity and a network transmission status based on the sixth information, and the second communication apparatus determines the N functional entities among the one or more functional entities based on the information.

Based on the technical solution shown in FIG. 6, the second communication apparatus may be a CMF, and the third communication apparatus may be a DMF. That is, the CMF requests computing and network status data information from the DMF, and the DMF generates a data collection task, and returns the collected computing and network status data to the CMF, that is, provides a computing service through a cooperative working procedure of the CMF and the DMF. The service requested by the first communication apparatus may be provided by the N functional entities. The N functional entities may be deployed on (and/or connected to) one or more communication apparatuses, that is, the data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

In an implementation example of Implementation 2, when the second communication apparatus is an AIMF and the service type requested by the first communication apparatus is AIaaS, the implementation may be implemented by using the solution shown in FIG. 7.

FIG. 7 is another implementation diagram of a communication method according to this application. The method includes the following steps.

S701: A first communication apparatus sends first information, and correspondingly a second communication apparatus receives the first information, where the first information is used to request a service, the first information includes type information of the service, and the type information of the service indicates that a type of the service is AIaaS.

Optionally, the first information sent by the first communication apparatus in S701 may further include one or more of an AI service type, a requirement for a resource (including at least one of a computing resource, a transmission resource, and a model resource), a QoS requirement, a feedback trigger condition for QoS fulfillment status, and the like. Correspondingly, it is subsequently indicated to the N functional entities that the provided service can meet the one or more items.

It should be noted that for an implementation process of the first information, refer to the descriptions in FIG. 3/FIG. 5b and related embodiments. For example, the first information may further include one or more of the information B, the information C, and the like described above.

Optionally, the first information received by the second communication apparatus includes type information indicating that the type of the service is AIaaS, and the second communication apparatus can indicate, by using the eighth information, to provide a service of the AIaaS type for the first communication apparatus. Correspondingly, in FIG. 7 and a related implementation process, the second communication apparatus may be understood as an AIMF, an AIMF node/module/network element, or the like.

S702: The second communication apparatus sends eighth information, and correspondingly a third communication apparatus receives the eighth information, where the eighth information is used to request AI data of the service, the eighth information is used to determine N functional entities that provide the AI data, and N is a positive integer.

Specifically, in S702, the second communication apparatus may generate the eighth information based on the first information, and the eighth information may be used to request the AI data of the service from the third communication apparatus. The AI data may include one or more of an AI model parameter, a dataset required for AI training, and a dataset required for AI inference.

Optionally, the eighth information received by the third communication apparatus in S702 is used to request the AI data of the service, and the third communication apparatus can provide the AI data in a plurality of manners, that is, the third communication apparatus may provide a service of a DaaS type. Correspondingly, in FIG. 7 and a related implementation process, the third communication apparatus may be understood as a DMF, a DMF node/module/network element, or the like.

Optionally, after receiving the eighth information of the AI data used to request the service, the third communication apparatus first obtains AI data information; the third communication apparatus generates an AI data collection task, and sends the AI data collection task to the one or more functional entities, so that the one or more functional entities provide the AI data for the third communication apparatus based on pipeline orchestration information included in the AI data collection task; and the third communication apparatus receives the AI data from the one or more functional entities, and sends the AI data to the second communication apparatus.

Optionally, after receiving the eighth information of the AI data used to request the service, the third communication apparatus first determines the pipeline orchestration information; the third communication apparatus generates the AI data collection task, and sends the AI data collection task to the one or more functional entities, so that the one or more functional entities provide the AI data for the first communication apparatus based on the pipeline orchestration information included in the AI data collection task; and the third communication apparatus sends the pipeline orchestration information to the second communication apparatus.

In a possible implementation, the method shown in FIG. 7 further includes the following steps.

The second communication apparatus receives the AI data from the third communication apparatus, and sends the AI data to the first communication apparatus.

Alternatively, the second communication apparatus receives pipeline orchestration information from the third communication apparatus, and sends the pipeline orchestration information to the first communication apparatus, where the pipeline orchestration information includes a forwarding path of the AI data in the one or more functional entities and/or identifiers of the one or more functional entities.

In other words, the second communication apparatus may further receive the AI data from the third communication apparatus, and the second communication apparatus may further send the AI data to the first communication apparatus. In this manner, the first communication apparatus can obtain the AI data, to provide AIaaS for the first communication apparatus.

Alternatively, the second communication apparatus receives the pipeline orchestration information from the third communication apparatus, and the second communication apparatus may further send the pipeline orchestration information to the first communication apparatus, so that the first communication apparatus can subsequently obtain the AI data by using the pipeline orchestration information. In this manner, the first communication apparatus can obtain the AI data, to provide AIaaS for the first communication apparatus.

Based on the foregoing technical solution, when the second communication apparatus is an AIMF and the third communication apparatus is a DMF, the AIMF may request AI data from the DMF, the DMF generates an AI data collection task, and the DMF may enable the first communication apparatus to obtain the AI data in a plurality of manners, that is, provide an AI service through a cooperative working procedure of the AIMF and the DMF. The service requested by the first communication apparatus may be provided by the one or more functional entities. The one or more functional entities may be deployed on (and/or connected to) one or more communication apparatuses, that is, the data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

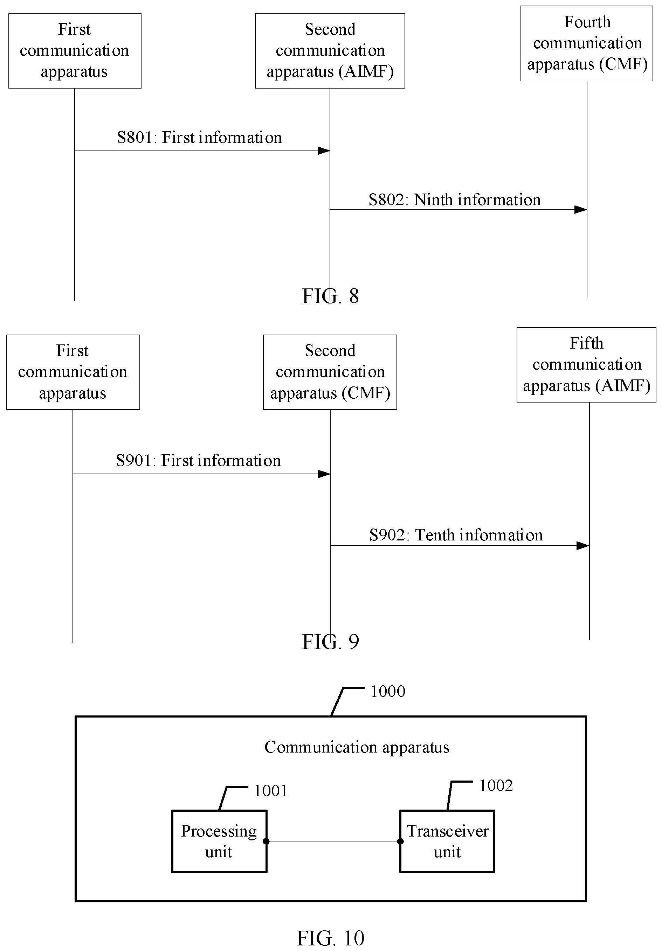

In an implementation example of Implementation 2, when the second communication apparatus is an AIMF and the service type requested by the first communication apparatus is AIaaS, the implementation may be implemented by using the solution shown in FIG. 8.

FIG. 8 is another implementation diagram of a communication method according to this application. The method includes the following steps.

S801: A first communication apparatus sends first information, and correspondingly a second communication apparatus receives the first information, where the first information is used to request a service, the first information includes type information of the service, and the type information of the service indicates that a type of the service is AIaaS.

It should be noted that for an implementation process of the first information, refer to the descriptions in FIG. 3/FIG. 5b and related embodiments. For example, the first information may further include one or more of the information B, the information C, and the like described above.

Optionally, the first information received by the second communication apparatus includes type information used to indicate that a type of the service is AIaaS, and the ninth information sent by the second communication apparatus may be used to determine the N functional entities that provide the AI computing result of the service, that is, the second communication apparatus may provide a service of the AIaaS type. Correspondingly, in FIG. 8 and a related implementation process, the second communication apparatus may be understood as an AIMF, an AIMF node/module/network element, or the like.

S802: The second communication apparatus sends the ninth information, and correspondingly a fourth communication apparatus receives the ninth information, where the ninth information is used to request the AI computing result of the service; and/or the ninth information is used to determine the N functional entities that provide the AI computing result, and N is a positive integer.

Optionally, after receiving the ninth information used to request the AI computing result of the service, the fourth communication apparatus generates an AI computing offloading task; and the fourth communication apparatus may send the AI computing offloading task to the N functional entities, where the AI computing offloading task includes the N functional entities and AI computing task allocation policies on the N functional entities.

Optionally, the ninth information received by the fourth communication apparatus is used to request the AI computing result of the service, and the fourth communication apparatus can provide the AI computing result in a plurality of manners, that is, the fourth communication apparatus may provide a service of a CaaS type. Correspondingly, in FIG. 8 and a related implementation process, the fourth communication apparatus may be understood as a CMF, a CMF node/module/network element, or the like.

Optionally, the AI computing result includes a model parameter of an AI model and/or AI data.

Optionally, when the second communication apparatus is an AIMF and the third communication apparatus is a CMF, after S802, the CMF may generate an AI computing offloading task based on an AI computing offloading request, including an AI computing task allocation policy. In this process, the CMF may further initiate a computing and network status collection process to the DMF, and generate an offloading policy of the AI computing task based on the computing and network status information, including a network node for executing the AI computing task and optionally AI model information or AI training set information required for executing the AI computing task. The CMF delivers the generated AI computing offloading task to the network node for execution.

In a possible implementation, the method shown in FIG. 8 further includes the following steps.

The second communication apparatus receives AI computing task information from the fourth communication apparatus, where the AI computing task information indicates task information for providing the AI computing result.

Alternatively, the second communication apparatus receives, from the fourth communication apparatus, indication information indicating a processing result of the service.

Alternatively, the second communication apparatus receives the AI computing result from the fourth communication apparatus, and sends the AI computing result to the first communication apparatus.

Specifically, the second communication apparatus may enable, in the foregoing plurality of manners, the first communication apparatus to obtain the AI computing result provided by the N functional entities, to improve flexibility of implementing the solution.

In a possible implementation, the method shown in FIG. 8 further includes the following steps.

The fourth communication apparatus sends the AI computing task information to the second communication apparatus, where the AI computing offloading task indicates the task information for providing the AI computing result.

Alternatively, the fourth communication apparatus sends, to the second communication apparatus, indication information indicating a processing result of the service.

Alternatively, the fourth communication apparatus receives the AI computing result from the N functional entities, and sends the AI computing result to the second communication apparatus or the first communication apparatus, where the ninth information is determined based on a request of the first communication apparatus.

Specifically, the fourth communication apparatus may further enable, in the foregoing plurality of manners, the first communication apparatus to obtain the AI computing result from the N functional entities, or the second communication apparatus to learn of an execution result of an AI computing task.

Based on the technical solution in FIG. 8, when the second communication apparatus is an AIMF and the fourth communication apparatus is a CMF, the AIMF may initiate an AI computing offloading request to the CMF, and the CMF generates an AI computing offloading task, and returns AI computing offloading result information to the AIMF, that is, provides an AI service through a cooperative working procedure of the AIMF and the CMF. The service requested by the first communication apparatus may be provided by the N functional entities. The N functional entities may be deployed on (and/or connected to) one or more communication apparatuses, that is, the data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

In an implementation example of Implementation 2, when the second communication apparatus is a CMF and the service type requested by the first communication apparatus is CaaS, the implementation may be implemented by using the solution shown in FIG. 9.

FIG. 9 is another implementation diagram of a communication method according to this application. The method includes the following steps.

S901: A first communication apparatus sends first information, and correspondingly a second communication apparatus receives the first information, where the first information is used to request a service, the first information includes type information of the service, and the type information of the service indicates that a type of the service is CaaS.

It should be noted that for an implementation process of the first information, refer to the descriptions in FIG. 3/FIG. 5b and related embodiments. For example, the first information may further include one or more of the information B, the information C, and the like described above.

Optionally, the first information received by the second communication apparatus includes type information indicating that the type of the service is CaaS, and the tenth information sent by the second communication apparatus may be used to determine the N functional entities that provide the AI computing result. Correspondingly, in FIG. 9 and a related implementation process, the second communication apparatus may be understood as a CMF, a CMF node/module/network element, or the like.

S902: The second communication apparatus sends the tenth information, and correspondingly a fifth communication apparatus receives the tenth information, where the tenth information is used to request the AI computing result of the service; and/or the tenth information is used to determine the N functional entities that provide the AI computing result, and N is a positive integer.

Optionally, after receiving the tenth information used to request the AI computing result of the service, the fifth communication apparatus first generates an AI computing task, and then sends the AI computing task information to the N functional entities, where the AI computing task information includes the N functional entities used to provide the AI computing result.

Optionally, the tenth information received by the fifth communication apparatus is used to request the AI computing result of the service, and the fifth communication apparatus can provide the AI computing result in a plurality of manners, that is, the fifth communication apparatus may provide a service of an AIaaS type. Correspondingly, in FIG. 9 and a related implementation process, the fourth communication apparatus may be understood as an AIMF, an AIMF node/module/network element, or the like.

Optionally, when the second communication apparatus is a CMF and the fifth communication apparatus is an AIMF, after S902, the AIMF may generate, based on an AI model/AI data request, an AI data/AI model transfer task. In this process, the AIMF may further initiate an AI data/AI model collection task to the DMF. For details, refer to a cooperative working procedure of the AIMF and the DMF. The AIMF delivers the AI data/AI model transfer task to a network node for execution.

In a possible implementation, the method shown in FIG. 9 further includes the following steps.

The second communication apparatus receives AI computing task information from the fifth communication apparatus, where the AI computing task information indicates task information for providing the AI computing result.

Alternatively, the second communication apparatus receives the AI computing result from the fifth communication apparatus, and sends the AI computing result to the first communication apparatus.

Specifically, the second communication apparatus may enable, in the foregoing plurality of manners, the first communication apparatus to obtain the AI computing result provided by the N functional entities, to improve flexibility of implementing the solution.

In a possible implementation, the method shown in FIG. 9 further includes the following steps.

The fifth communication apparatus sends the AI computing task information to the second communication apparatus.

Alternatively, the fifth communication apparatus receives the AI computing result from the N functional entities, and sends the AI computing result to the second communication apparatus or the first communication apparatus.

Specifically, the fifth communication apparatus may further enable, in the foregoing plurality of manners, the first communication apparatus to obtain the AI computing result from the N functional entities, or the second communication apparatus to learn of an execution result of an AI computing task.

Optionally, the AI computing task information includes at least one of the following: a forwarding path of the AI computing result in the N functional entities, identifiers of the N functional entities, AI model information, and AI training set information.

Optionally, the AI computing result includes a model parameter of an AI model and/or AI data.

Based on the technical solution shown in FIG. 9, when the second communication apparatus is a CMF and the fifth communication apparatus is an AIMF, the CMF may request AI data/AI model from the AIMF, and the AIMF generates an AI data/AI model transfer task, and notifies the CMF of an AI data/AI model transfer result, that is, provides a computing service through a cooperative working procedure of the CMF and the AIMF. The service requested by the first communication apparatus may be provided by the N functional entities. The N functional entities may be deployed on (and/or connected to) one or more communication apparatuses, that is, the data for the service requested by the first communication apparatus can be provided through the one or more communication apparatuses. Therefore, in a communication system, the one or more communication apparatuses can provide services based on requests of other communication apparatuses. By enabling cooperation among different communication apparatuses, utilization of the data processing capability of the communication apparatus can be improved.

It should be noted that the cooperative working processes of the CMF, the DMF, and the AIMF provided in the four implementations in FIG. 6 to FIG. 9 may occur simultaneously, or may occur sequentially without distinguishing a sequence. Steps in different implementations may be used (or combined) with each other.

Refer to FIG. 10. An embodiment of this application provides a communication apparatus 1000. The communication apparatus 1000 may implement functions of the communication apparatus (for example, the first communication apparatus, the second communication apparatus, the third communication apparatus, the fourth communication apparatus, or the fifth communication apparatus) in the foregoing method embodiments, and therefore can also implement beneficial effect of the foregoing method embodiments. In this embodiment of this application, the communication apparatus 1000 may be a terminal device (or a network device), or may be an integrated circuit, an element, or the like, for example, a chip, inside a terminal device (or a network device).

In a possible implementation, when the apparatus 1000 is configured to perform the method performed by the first communication apparatus in the foregoing embodiments, the apparatus 1000 includes a processing unit 1001 and a transceiver unit 1002. The processing unit 1001 is configured to determine first information. The transceiver unit 1002 is configured to send the first information to a second communication apparatus, where the first information is used to request a service, the first information is used to determine N functional entities that provide the service, and N is a positive integer. The transceiver unit 1002 is further configured to receive data of the service from the N functional entities.

In a possible implementation, when the apparatus 1000 is configured to perform the method performed by the second communication apparatus in the foregoing embodiments, the apparatus 1000 includes a processing unit 1001 and a transceiver unit 1002. The transceiver unit 1002 is configured to receive first information from a first communication apparatus, where the first information is used to request a service, the first information is used to determine N functional entities that provide the service, and N is a positive integer. The processing unit 1001 is configured to determine second information. The transceiver unit 1002 is further configured to send the second information to the N functional entities, where the second information indicates to provide the service for the first communication apparatus.

In a possible implementation, when the apparatus 1000 is configured to perform the method performed by the second communication apparatus in the foregoing embodiments, the apparatus 1000 includes a processing unit 1001 and a transceiver unit 1002. The transceiver unit 1002 is configured to receive first information from a first communication apparatus, where the first information is used to request a service, the first information includes type information of the service, and the type information of the service indicates that a type of the service is computing as a service. The processing unit 1001 is configured to determine sixth information. The transceiver unit 1002 is further configured to send the sixth information to a third communication apparatus based on the first information, where the sixth information is used to request resource status information of one or more functional entities. The transceiver unit 1002 is further configured to receive seventh information from the third communication apparatus, where the seventh information indicates resource status information of the one or more functional entities, and the first information and the seventh information are used to determine N functional entities among the one or more functional entities. The transceiver unit 1002 is further configured to send second information to the N functional entities, where the second information indicates to provide the service for the first communication apparatus.

In a possible implementation, when the apparatus 1000 is configured to perform the method performed by the third communication apparatus in the foregoing embodiments, the apparatus 1000 includes a processing unit 1001 and a transceiver unit 1002. The transceiver unit 1002 is configured to receive sixth information from a second communication apparatus, where the sixth information is used to request resource status information of one or more functional entities. The processing unit 1001 is configured to determine seventh information. The transceiver unit 1002 is further configured to send the seventh information to the second communication apparatus, where the seventh information indicates resource status information of the one or more functional entities, and the seventh information is used to determine N functional entities among the one or more functional entities.

In a possible implementation, when the apparatus 1000 is configured to perform the method performed by the second communication apparatus in the foregoing embodiments, the apparatus 1000 includes a processing unit 1001 and a transceiver unit 1002. The transceiver unit 1002 is configured to receive first information from a first communication apparatus, where the first information is used to request a service, the first information includes type information of the service, and the type information of the service indicates that a type of the service is AI as a service. The processing unit 1001 is configured to determine eighth information based on the first information. The transceiver unit 1002 is further configured to send the eighth information to a third communication apparatus, where the eighth information is used to request AI data of the service, the eighth information is used to determine N functional entities that provide the AI data, and N is a positive integer.

In a possible implementation, when the apparatus 1000 is configured to perform the method performed by the third communication apparatus in the foregoing embodiments, the apparatus 1000 includes a processing unit 1001 and a transceiver unit 1002. The transceiver unit 1002 is configured to receive eighth information from a second communication apparatus, where the eighth information is used to request AI data of a service, the eighth information is used to determine N functional entities that provide the AI data, and N is a positive integer. The transceiver unit 1002 is further configured to receive the AI data from the N functional entities, and send the AI data to the second communication apparatus. Alternatively, the processing unit 1001 is configured to determine pipeline orchestration information; and the transceiver unit 1002 is further configured to send the pipeline orchestration information to the second communication apparatus, where the pipeline orchestration information includes a forwarding path of the AI data in the N functional entities and/or identifiers of the N functional entities. Alternatively, the third communication apparatus sends the pipeline orchestration information to the N functional entities.

In a possible implementation, when the apparatus 1000 is configured to perform the method performed by the second communication apparatus in the foregoing embodiments, the apparatus 1000 includes a processing unit 1001 and a transceiver unit 1002. The transceiver unit 1002 is configured to receive first information from a first communication apparatus, where the first information is used to request a service, the first information includes type information of the service, and the type information of the service indicates that a type of the service is AI as a service. The processing unit 1001 is configured to determine ninth information based on the first information. The transceiver unit 1002 is further configured to send the ninth information to a fourth communication apparatus, where the ninth information is used to request an AI computing result of the service; and/or the ninth information is used to determine N functional entities that provide the AI computing result, and N is a positive integer.

In a possible implementation, when the apparatus 1000 is configured to perform the method performed by the fourth communication apparatus in the foregoing embodiments, the apparatus 1000 includes a processing unit 1001 and a transceiver unit 1002. The transceiver unit 1002 is configured to receive ninth information from a second communication apparatus, where the ninth information is used to request an AI computing result of a service; and/or the ninth information is used to determine N functional entities that provide the AI computing result, and N is a positive integer. The transceiver unit is further configured to determine AI computing task information. The transceiver unit 1002 is further configured to send the AI computing task information to the N functional entities, where the AI computing task information indicates task information for providing the AI computing result.

In a possible implementation, when the apparatus 1000 is configured to perform the method performed by the second communication apparatus in the foregoing embodiments, the apparatus 1000 includes a processing unit 1001 and a transceiver unit 1002. The transceiver unit 1002 is configured to receive first information from a first communication apparatus, where the first information is used to request a service, the first information includes type information of the service, and the type information of the service indicates that a type of the service is computing as a service. The processing unit 1001 is configured to determine tenth information based on the first information. The transceiver unit 1002 is further configured to send tenth information to a fifth communication apparatus, where the tenth information is used to request an AI computing result of the service; and/or the tenth information is used to determine N functional entities that provide the AI computing result, and N is a positive integer.

In a possible implementation, when the apparatus 1000 is configured to perform the method performed by the fifth communication apparatus in the foregoing embodiments, the apparatus 1000 includes a processing unit 1001 and a transceiver unit 1002. The transceiver unit 1002 is configured to receive tenth information from a second communication apparatus, where the tenth information is used to request an AI computing result of a service; and/or the tenth information is used to determine N functional entities that provide the AI computing result, and N is a positive integer. The processing unit 1001 is configured to determine AI computing task information. The transceiver unit 1002 is further configured to send the AI computing task information to the N functional entities, where the AI computing task information indicates task information for providing the AI computing result.

It should be noted that for details of content such as an information execution process of the unit of the communication apparatus 1000, refer to the descriptions in the foregoing method embodiments of this application. Details are not described herein again.

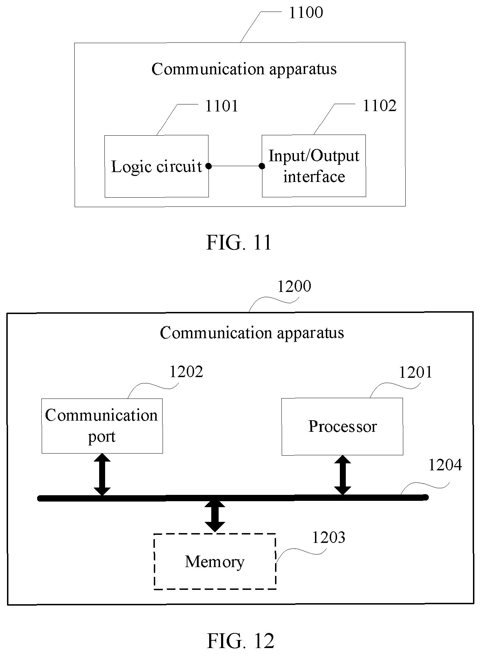

FIG. 11 is another diagram of a structure of a communication apparatus 1100 according to this application. The communication apparatus 1100 includes a logic circuit 1101 and an input/output interface 1102. The communication apparatus 1100 may be a chip or an integrated circuit.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

In a possible implementation, when the apparatus 1100 is configured to perform the method performed by the first communication apparatus in the foregoing embodiments, the logic circuit 1101 is configured to determine first information. The input/output interface 1102 is configured to send the first information to a second communication apparatus, where the first information is used to request a service, the first information is used to determine N functional entities that provide the service, and N is a positive integer. The input/output interface 1102 is further configured to receive data of the service from the N functional entities.

In a possible implementation, when the apparatus 1100 is configured to perform the method performed by the second communication apparatus in the foregoing embodiments, the input/output interface 1102 is configured to receive first information from a first communication apparatus, where the first information is used to request a service, the first information is used to determine N functional entities that provide the service, and N is a positive integer. The logic circuit 1101 is configured to determine second information. The input/output interface 1102 is further configured to send the second information to the N functional entities, where the second information indicates to provide the service for the first communication apparatus.

In a possible implementation, when the apparatus 1100 is configured to perform the method performed by the second communication apparatus in the foregoing embodiments, the input/output interface 1102 is configured to receive first information from a first communication apparatus, where the first information is used to request a service, the first information includes type information of the service, and the type information of the service indicates that a type of the service is computing as a service. The logic circuit 1101 is configured to determine sixth information. The input/output interface 1102 is further configured to send the sixth information to a third communication apparatus based on the first information, where the sixth information is used to request resource status information of one or more functional entities. The input/output interface 1102 is further configured to receive seventh information from the third communication apparatus, where the seventh information indicates resource status information of the one or more functional entities, and the first information and the seventh information are used to determine N functional entities among the one or more functional entities. The input/output interface 1102 is further configured to send second information to the N functional entities, where the second information indicates to provide the service for the first communication apparatus.

In a possible implementation, when the apparatus 1100 is configured to perform the method performed by the third communication apparatus in the foregoing embodiments, the input/output interface 1102 is configured to receive sixth information from a second communication apparatus, where the sixth information is used to request resource status information of one or more functional entities. The logic circuit 1101 is configured to determine seventh information. The input/output interface 1102 is further configured to send the seventh information to the second communication apparatus, where the seventh information indicates resource status information of the one or more functional entities, and the seventh information is used to determine N functional entities among the one or more functional entities.

In a possible implementation, when the apparatus 1100 is configured to perform the method performed by the second communication apparatus in the foregoing embodiments, the input/output interface 1102 is configured to receive first information from a first communication apparatus, where the first information is used to request a service, the first information includes type information of the service, and the type information of the service indicates that a type of the service is AI as a service. The logic circuit 1101 is configured to determine eighth information based on the first information. The input/output interface 1102 is further configured to send the eighth information to a third communication apparatus, where the eighth information is used to request AI data of the service, the eighth information is used to determine N functional entities that provide the AI data, and N is a positive integer.

In a possible implementation, when the apparatus 1100 is configured to perform the method performed by the third communication apparatus in the foregoing embodiments, the input/output interface 1102 is configured to receive eighth information from a second communication apparatus, where the eighth information is used to request AI data of a service, the eighth information is used to determine N functional entities that provide the AI data, and N is a positive integer. The input/output interface 1102 is further configured to receive the AI data from the N functional entities, and send the AI data to the second communication apparatus. Alternatively, the logic circuit 1101 is configured to determine pipeline orchestration information; and the input/output interface 1102 is further configured to send the pipeline orchestration information to the second communication apparatus, where the pipeline orchestration information includes a forwarding path of the AI data in the N functional entities and/or identifiers of the N functional entities. Alternatively, the third communication apparatus sends the pipeline orchestration information to the N functional entities.

In a possible implementation, when the apparatus 1100 is configured to perform the method performed by the second communication apparatus in the foregoing embodiments, the input/output interface 1102 is configured to receive first information from a first communication apparatus, where the first information is used to request a service, the first information includes type information of the service, and the type information of the service indicates that a type of the service is AI as a service. The logic circuit 1101 is configured to determine ninth information based on the first information. The input/output interface 1102 is further configured to send the ninth information to a fourth communication apparatus, where the ninth information is used to request an AI computing result of the service; and/or the ninth information is used to determine N functional entities that provide the AI computing result, and N is a positive integer.

In a possible implementation, when the apparatus 1100 is configured to perform the method performed by the fourth communication apparatus in the foregoing embodiments, the input/output interface 1102 is configured to receive ninth information from a second communication apparatus, where the ninth information is used to request an AI computing result of a service; and/or the ninth information is used to determine N functional entities that provide the AI computing result, and N is a positive integer. The transceiver unit is further configured to determine AI computing task information. The input/output interface 1102 is further configured to send the AI computing task information to the N functional entities, where the AI computing task information indicates task information for providing the AI computing result.

In a possible implementation, when the apparatus 1100 is configured to perform the method performed by the second communication apparatus in the foregoing embodiments, the input/output interface 1102 is configured to receive first information from a first communication apparatus, where the first information is used to request a service, the first information includes type information of the service, and the type information of the service indicates that a type of the service is computing as a service. The logic circuit 1101 is configured to determine tenth information based on the first information. The input/output interface 1102 is further configured to send the tenth information to a fifth communication apparatus, where the tenth information is used to request an AI computing result of the service; and/or the tenth information is used to determine N functional entities that provide the AI computing result, and N is a positive integer.

In a possible implementation, when the apparatus 1100 is configured to perform the method performed by the fifth communication apparatus in the foregoing embodiments, the input/output interface 1102 is configured to receive tenth information from a second communication apparatus, where the tenth information is used to request an AI computing result of a service; and/or the tenth information is used to determine N functional entities that provide the AI computing result, and N is a positive integer. The logic circuit 1101 is configured to determine AI computing task information. The input/output interface 1102 is further configured to send the AI computing task information to the N functional entities, where the AI computing task information indicates task information for providing the AI computing result.

In a possible implementation, the processing unit 1001 shown in FIG. 10 may be the logic circuit 1101 in FIG. 11.

Optionally, the logic circuit 1101 may be a processing apparatus, and some or all of functions of the processing apparatus may be implemented by software. Some or all of the functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory by using a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate arrays, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD) or another integrated chip, or any combination of the foregoing chips or processors.

FIG. 12 shows a communication apparatus 1200 in the foregoing embodiments according to an embodiment of this application. The communication apparatus 1200 may be specifically a communication apparatus serving as the terminal device in the foregoing embodiments. An example shown in FIG. 12 is that the terminal device is implemented through a terminal device (or a component in a terminal device).

In a possible diagram of a logical structure of the communication apparatus 1200, the communication apparatus 1200 may include but is not limited to at least one processor 1201 and a communication port 1202.

Further, optionally, the apparatus may include at least one of a memory 1203 and a bus 1204. In this embodiment of this application, the at least one processor 1201 is configured to perform control processing on an action of the communication apparatus 1200.

In addition, the processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1200 shown in FIG. 12 may be specifically configured to implement steps implemented by the terminal device in the foregoing method embodiments, and achieve technical effect corresponding to the terminal device. For a specific implementation of the communication apparatus shown in FIG. 12, refer to the descriptions in the foregoing method embodiments. Details are not enumerated herein again.

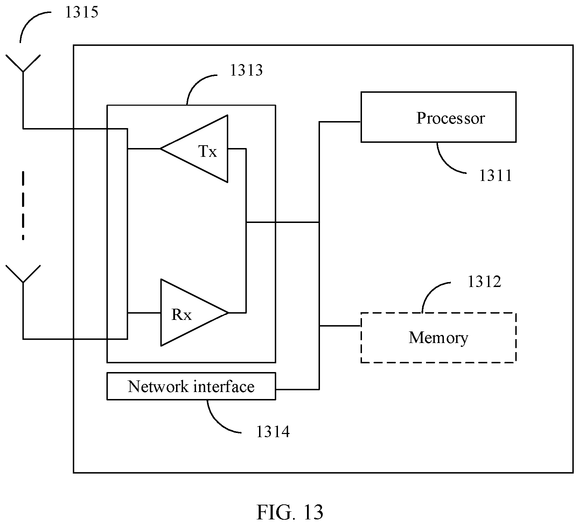

FIG. 13 is a diagram of a structure of a communication apparatus 1300 in the foregoing embodiments according to an embodiment of this application. The communication apparatus 1300 may be specifically a communication apparatus serving as the network device in the foregoing embodiments. An example shown in FIG. 13 is that the network device is implemented through a network device (or a component in a network device). For a structure of the communication apparatus, refer to the structure shown in FIG. 13.

The communication apparatus 1300 includes at least one processor 1311 and at least one network interface 1314. Further, optionally, the communication apparatus includes at least one memory 1312, at least one transceiver 1313, and one or more antennas 1315. The processor 1311, the memory 1312, the transceiver 1313, and the network interface 1314 are connected, for example, through a bus. In this embodiment of this application, the connection may include various interfaces, transmission lines, buses, or the like. This is not limited in this embodiment. The antenna 1315 is connected to the transceiver 1313. The network interface 1314 is configured to enable the communication apparatus to communicate with another communication device through a communication link. For example, the network interface 1314 may include a network interface between the communication apparatus and a core network device, for example, an S1 interface. The network interface may include a network interface between the communication apparatus and another communication apparatus (for example, another network device or core network device), for example, an X2 interface or an Xn interface.

The processor 1311 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 1311 in FIG. 13 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store a software program and data. The memory 1312 may exist independently, and is connected to the processor 1311. Optionally, the memory 1312 and the processor 1311 may be integrated together, for example, integrated into one chip. The memory 1312 can store program code for executing the technical solutions in embodiments of this application, and the processor 1311 controls execution of the program code. Various types of executed computer program code may also be considered as drivers of the processor 1311.

FIG. 13 shows only one memory and one processor. In an actual terminal device, there may be a plurality of processors and a plurality of memories. The memory may also be referred to as a storage medium, a storage device, or the like. The memory may be a storage element on a same chip as the processor, namely, an on-chip storage element, or may be an independent storage element. This is not limited in embodiments of this application.

The transceiver 1313 may be configured to support receiving or sending of a radio frequency signal between the communication apparatus and the terminal, and the transceiver 1313 may be connected to the antenna 1315. The transceiver 1313 includes a transmitter machine Tx and a receiver machine Rx. Specifically, the one or more antennas 1315 may receive a radio frequency signal. The receiver machine Rx of the transceiver 1313 is configured to receive the radio frequency signal from the antenna, convert the radio frequency signal into a digital baseband signal or a digital intermediate frequency signal, and provide the digital baseband signal or the digital intermediate frequency signal for the processor 1311, so that the processor 1311 performs further processing on the digital baseband signal or the digital intermediate frequency signal, for example, performs demodulation processing and decoding processing. In addition, the transmitter machine Tx of the transceiver 1313 is further configured to: receive a modulated digital baseband signal or digital intermediate frequency signal from the processor 1311, convert the modulated digital baseband signal or digital intermediate frequency signal into a radio frequency signal, and send the radio frequency signal through the one or more antennas 1315. Specifically, the receiver machine Rx may selectively perform one-level or multi-level down-conversion processing and analog-to-digital conversion processing on the radio frequency signal, to obtain the digital baseband signal or the digital intermediate frequency signal. A sequence of the down-conversion processing and the analog-to-digital conversion processing is adjustable. The transmitter machine Tx may selectively perform one-level or multi-level up-conversion processing and digital-to-analog conversion processing on the modulated digital baseband signal or digital intermediate frequency signal, to obtain the radio frequency signal. A sequence of the up-conversion processing and the digital-to-analog conversion processing is adjustable. The digital baseband signal and the digital intermediate frequency signal may be collectively referred to as a digital signal.

The transceiver 1313 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. That is, the transceiver unit includes the receiving unit and the sending unit. The receiving unit may also be referred to as a receiver machine, an input port, a receiving circuit, or the like. The sending unit may be referred to as a transmitter machine, a transmitter, a transmitting circuit, or the like.

It should be noted that the communication apparatus 1300 shown in FIG. 13 may be specifically configured to implement steps implemented by the network device in the foregoing method embodiments, and achieve technical effect corresponding to the network device. For a specific implementation of the communication apparatus 1300 shown in FIG. 13, refer to the descriptions in the foregoing method embodiments. Details are not enumerated herein again.

An embodiment of this application further provides a computer-readable storage medium, configured to store one or more computer-executable instructions. When the computer-executable instructions are executed by a processor, the processor performs the method according to the possible implementations of the communication apparatus (for example, the terminal device or the network device) in the foregoing embodiments.

An embodiment of this application further provides a computer program product (or referred to as a computer program). When the computer program product is executed by a processor, the processor performs the method according to the possible implementations of the communication apparatus (for example, the terminal device or the network device).

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. An architecture of the network system includes the first communication apparatus and the second communication apparatus in any one of the foregoing embodiments.

Optionally, the communication system further includes at least one of the foregoing third communication apparatus, the foregoing fourth communication apparatus, and the foregoing fifth communication apparatus.

Optionally, the communication system further includes the foregoing N functional entities.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part makes a contribution, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, applied to a first communication apparatus, wherein the method comprises:
sending first information to a second communication apparatus, wherein the first information is used to request a service, the first information is used to determine N functional entities that provide the service, and N is a positive integer; and
receiving data of the service from the N functional entities.

2. The method according to claim 1, wherein sending the first information to the second communication apparatus comprises:
sending the first information to the second communication apparatus through a network exposure function NEF.

3. A communication method, applied to a second communication apparatus, wherein the method comprises:
receiving first information from a first communication apparatus, wherein the first information is used to request a service, the first information is used to determine N functional entities that provide the service, and N is a positive integer; and
sending second information to the N functional entities, wherein the second information indicates to provide the service for the first communication apparatus.

4. The method according to claim 3, wherein receiving the first information from the first communication apparatus comprises:
receiving the first information from the first communication apparatus through an NEF.

5. The method according to any one of claims 1 to 4, further comprising:
obtaining third information, wherein the third information indicates resource status information of M functional entities, the M functional entities comprise the N functional entities, and M is greater than or equal to N.

6. The method according to any one of claims 1 to 5, wherein the second information comprises at least one of the following:
an identifier of a task, a type of the task, a quality of service QoS requirement of the task, and a feedback trigger condition for QoS fulfillment status of the task, wherein
the task is used to provide the service.

7. The method according to claim 6, wherein the QoS requirement of the task comprises one or more QoS requirements of the N functional entities.

8. The method according to claim 6 or 7, wherein the task meets at least one of the following:
the first information is used to determine the identifier of the task;
the first information comprises type information of the service and/or content information of the service, and the type information of the service and/or the content information of the service are/is used to determine the type of the task;
the first information comprises content information of the service, and the content information of the service is used to determine the QoS requirement of the task; and
the first information comprises feedback trigger condition information of the service, and the feedback trigger condition information of the service is used to determine the feedback trigger condition for QoS fulfillment status of the task.

9. The method according to any one of claims 6 to 8, further comprising:
receiving fourth information from the N functional entities, wherein the fourth information indicates a QoS fulfillment status of the service; and
sending fifth information to the N functional entities and/or the first communication apparatus based on the fourth information, wherein the fifth information is used to update the QoS requirement of the task.

10. The method according to any one of claims 1 to 9, wherein the first information comprises at least one of the following:
the type information of the service, indicating a type of the service, wherein the type comprises at least one of network as a service, computing as a service, artificial intelligence AI as a service, and data as a service;
the content information of the service, indicating at least one of a requirement for a network resource and a QoS requirement for the service; and
the feedback trigger condition information of the service, indicating the feedback trigger condition for QoS fulfillment status.

11. The method according to claim 10, wherein the feedback trigger condition for QoS fulfillment status comprises a QoS deviation degree and/or a threshold of a QoS deviation value.

12. A communication method, applied to a second communication apparatus, wherein the method comprises:
receiving first information from a first communication apparatus, wherein the first information is used to request a service, the first information comprises type information of the service, and the type information of the service indicates that a type of the service is computing as a service;
sending sixth information to a third communication apparatus based on the first information, wherein the sixth information is used to request resource status information of one or more functional entities;
receiving seventh information from the third communication apparatus, wherein the seventh information indicates resource status information of the one or more functional entities, and the first information and the seventh information are used to determine N functional entities among the one or more functional entities; and
sending second information to the N functional entities, wherein the second information indicates to provide the service for the first communication apparatus.

13. A communication method, applied to a third communication apparatus, wherein the method comprises:
receiving sixth information from a second communication apparatus, wherein the sixth information is used to request resource status information of one or more functional entities, and M is a positive integer; and
sending seventh information to the second communication apparatus, wherein the seventh information indicates resource status information of the one or more functional entities, and the seventh information is used to determine N functional entities among the one or more functional entities.

14. The method according to claim 12 or 13, wherein the seventh information comprises at least one of the following:
computing resource status information of the one or more functional entities and transmission status information of a network in which the one or more functional entities are located.

15. A communication method, applied to a second communication apparatus, wherein the method comprises:
receiving first information from a first communication apparatus, wherein the first information is used to request a service, the first information comprises type information of the service, and the type information of the service indicates that a type of the service is AI as a service; and
sending eighth information to a third communication apparatus based on the first information, wherein the eighth information is used to request AI data of the service, the eighth information is used to determine N functional entities that provide the AI data, and N is a positive integer.

16. The method according to claim 15, further comprising:
receiving the AI data from the third communication apparatus, and sending the AI data to the first communication apparatus; or
receiving pipeline orchestration information from the third communication apparatus, and sending the pipeline orchestration information to the first communication apparatus, wherein the pipeline orchestration information comprises a forwarding path of the AI data in the N functional entities and/or identifiers of the N functional entities.

17. A communication method, applied to a third communication apparatus, wherein the method comprises:
receiving eighth information from a second communication apparatus, wherein the eighth information is used to request AI data of a service, the eighth information is used to determine N functional entities that provide the AI data, and N is a positive integer; and
receiving the AI data from the N functional entities, and sending the AI data to the second communication apparatus; sending, by the third communication apparatus, pipeline orchestration information to the second communication apparatus, wherein the pipeline orchestration information comprises a forwarding path of the AI data in the N functional entities and/or identifiers of the N functional entities; or sending, by the third communication apparatus, the pipeline orchestration information to the N functional entities.

18. A communication method, applied to a second communication apparatus, wherein the method comprises:
receiving first information from a first communication apparatus, wherein the first information is used to request a service, the first information comprises type information of the service, and the type information of the service indicates that a type of the service is AI as a service; and
sending ninth information to a fourth communication apparatus based on the first information, wherein the ninth information is used to request an AI computing result of the service; and/or the ninth information is used to determine N functional entities that provide the AI computing result, and N is a positive integer.

19. The method according to claim 18, further comprising:
receiving AI computing task information from the fourth communication apparatus, wherein the AI computing task information indicates task information for providing the AI computing result;
receiving, from the fourth communication apparatus, indication information indicating a processing result of the service; or
receiving the AI computing result from the fourth communication apparatus, and sending the AI computing result to the first communication apparatus.

20. A communication method, applied to a fourth communication apparatus, wherein the method comprises:
receiving ninth information from a second communication apparatus, wherein the ninth information is used to request an AI computing result of the service; and/or the ninth information is used to determine N functional entities that provide the AI computing result, and N is a positive integer; and
sending AI computing task information to the N functional entities, wherein the AI computing task information indicates task information for providing the AI computing result.

21. The method according to claim 20, further comprising:
sending the AI computing task information to the second communication apparatus, wherein the AI computing offloading task indicates the task information for providing the AI computing result;
sending, to the second communication apparatus, indication information indicating a processing result of the service; or
receiving the AI computing result from the N functional entities, and sending the AI computing result to the second communication apparatus or a first communication apparatus, wherein the ninth information is determined based on a request of the first communication apparatus.

22. A communication method, applied to a second communication apparatus, wherein the method comprises:
receiving first information from a first communication apparatus, wherein the first information is used to request a service, the first information comprises type information of the service, and the type information of the service indicates that a type of the service is computing as a service; and
sending tenth information to a fifth communication apparatus based on the first information, wherein the tenth information is used to request an AI computing result of the service; and/or the tenth information is used to determine N functional entities that provide the AI computing result, and N is a positive integer.

23. The method according to claim 22, further comprising:
receiving AI computing task information from the fifth communication apparatus, wherein the AI computing task information indicates task information for providing the AI computing result; or
receiving the AI computing result from the fifth communication apparatus, and sending the AI computing result to the first communication apparatus.

24. A communication method, applied to a fifth communication apparatus, wherein the method comprises:
receiving tenth information from a second communication apparatus, wherein the tenth information is used to request an artificial intelligence AI computing result of the service; and/or the tenth information is used to determine N functional entities that provide the AI computing result, and N is a positive integer; and
sending AI computing task information to the N functional entities, wherein the AI computing task information indicates task information for providing the AI computing result.

25. The method according to claim 24, further comprising:
sending the AI computing task information to the second communication apparatus; or
receiving the AI computing result from the N functional entities, and sending the AI computing result to the second communication apparatus or a first communication apparatus.

26. The method according to any one of claims 19 to 25, wherein the AI computing task information comprises at least one of the following:
a forwarding path of the AI computing result in the N functional entities, identifiers of the N functional entities, AI model information, and AI training set information.

27. The method according to any one of claims 18 to 26, wherein the AI computing result comprises a model parameter of an AI model and/or AI data.

28. A communication apparatus, comprising a module configured to perform the method according to any one of claims 1 to 27.

29. A communication apparatus, comprising at least one processor, wherein the at least one processor is configured to perform the method according to any one of claims 1 to 27.

30. The communication apparatus according to claim 29, wherein the communication apparatus is a chip or a chip system.

31. A computer-readable storage medium, wherein the computer-readable storage medium stores a computer program or instructions; and when the computer program or the instructions are executed by a communication apparatus, the method according to any one of claims 1 to 27 is implemented.
